# EUROPEAN PATENT APPLICATION

(11) **EP 4 693 009 A1**
(43) Date of publication of application: **11.02.2026**
(21) Application number: 24857728.0
(22) Date of filing: 21.03.2024
(51) Int. Cl.: G06F 3/0484

(54) **DISTRIBUTED DATA SEARCH METHOD AND ELECTRONIC DEVICE**

(30) Priority: 25.08.2023 CN 202311088923
(71) Applicant: Honor Device Co., Ltd., Shenzhen, Guangdong 518040 (CN)
(72) Inventor: ZHANG, Jie, Shenzhen, Guangdong 518040 (CN)
(74) Representative: Goddar, Heinz J.
(86) International application number: PCT/CN2024/083120
(87) International publication number: WO 2025/044176

(57) **Abstract**

This application provides a distributed data search method and an electronic device, and relates to the field of terminal technologies. The method can enable a user to search for data on a plurality of devices on one device, simplifying a search operation, and improving human-machine interaction experience. The method includes: A first device displays a first interface, where the first interface includes a search box, a device name of a second device, and a device name of a third device; and in response to a search operation of entering a keyword in the search box, displays a second interface, where the second interface includes a search result of the first device, a search result of the second device, and a search result of the third device.

## Description

This application claims priority to Chinese Patent Application No. 202311088923.2, filed with the China National Intellectual Property Administration on August 25, 2023 and entitled "DISTRIBUTED DATA SEARCH METHOD AND ELECTRONIC DEVICE", which is incorporated herein by reference in its entirety.

### TECHNICAL FIELD

This application relates to the field of terminal technologies, and in particular, to a distributed data search method and an electronic device.

### BACKGROUND

As a user owns more electronic devices, media resources (for example, pictures or videos) of the user may be distributed on different electronic devices. To help the user manage the media resources on different devices, an electronic device such as a mobile phone can access the media resources on another electronic device located in a same network as the electronic device, for example, browse the pictures or the videos on the another electronic device.

### SUMMARY

Embodiments of this application provide a distributed data search method and an electronic device, so that a user can search for data of a plurality of devices on one device, simplifying a search operation, and improving human-machine interaction experience.

To achieve the foregoing objective, the following technical solutions are used in embodiments of this application.

According to a first aspect, this application provides a distributed data search method, applied to a first device. The method includes: A first device displays a first interface, where the first interface includes a search box, a device name of a second device, and a device name of a third device; and in response to a search operation of entering a keyword in the search box, the first device displays a second interface, where the second interface includes a search result of the first device, a search result of the second device, and a search result of the third device.

As can be learned, a user does not need to manually establish a connection between the first device and the second device or the third device before performing a search operation; and one search operation can enable the first device to search the first device and the other two devices and display the search result of each device, and the device connected to the first device does not need to be switched, simplifying the search operation of the user, and improving search efficiency. It should be noted that the first device, the second device, and the third device are all electronic devices.

In an implementation provided in a first aspect, that the first device displays the first interface includes: In response to an operation of opening a gallery application by the user, the first device displays a third interface, where the third interface includes a first option; and in response to an operation performed by the user on the first option, the first device displays the first interface, where the first interface further includes an album of the first device.

In other words, the user can view a resource such as a picture or a video of another device (for example, the second device or the third device) in the gallery application of the first device.

In an implementation provided in the first aspect, the search result of the second device includes prompt information of the second device, and the prompt information of the second device indicates a reason why data related to the keyword is not found in the second device. In other words, when searching for the data of the second device based on the keyword, the first device may not find a picture related to the keyword. In this case, the first device may display a reason why the picture related to the keyword is not found.

In an implementation provided in the first aspect, the first device is connected to the second device, and the prompt information of the second device indicates that the second device does not include the data related to the keyword. In other words, the reason why the picture related to the keyword is not found may be that the second device does not include the data related to the keyword.

In an implementation provided in the first aspect, the first device is not connected to the second device, the prompt information of the second device indicates a reason why the first device fails to be connected to the second device. In other words, the reason why the picture related to the keyword is not found may be that the first device is not connected to the second device, and the first device does not search for the data of the second device.

In an implementation provided in the first aspect, the second interface further includes a second option, and the method further includes: In response to an operation performed by the user on the second option, the first device establishes a connection to the second device, and searches for the data of the second device based on the keyword after being connected to the second device. In other words, in a case that the reason why the picture related to the keyword is not found is that the first device is not connected to the second device, the first device may display the second option (for example, a "search again" option), so that in a case that a search result page (namely, the second interface) does not need to be exit, the user triggers, based on the second option, the first device to establish a connection to the second device and search for the data of the second device, simplifying operations of the user.

In an implementation provided in the first aspect, the search result of the second device includes a thumbnail of the picture related to the keyword in the second device, and the method further includes: The first device detects a connected state between the first device and the second device; and if the first device detects that the connected state between the first device and the second device is switched to a disconnected state and the first device can find the second device, the first device displays a fourth interface, where the fourth interface includes the search result of the first device and a reason why the first device is disconnected from the second device; or if the first device detects that the connected state between the first device and the second device is switched to a disconnected state and the first device cannot find the second device, the first device displays a fifth interface, where the fifth interface includes the search result of the first device and does not include related information of the second device.

It can be understood that after the first device is disconnected from the second device, if the second device can be discovered (that is, the first device can find the second device), the first device may display a reason why the first device is disconnected from the second device, so that the user can quickly find out the reason and resolve the problem; or if the second device cannot be discovered (that is, the first device cannot find the second device), the first device does not display any information of the second device.

In an implementation provided in the first aspect, the fourth interface further includes a third option, and the third option is used to trigger the first device to establish a connection to the second device. In other words, if the second device can be discovered, the first device may further display the third option, so that the user can quickly trigger the first device to re-establish a connection to the second device.

In an implementation provided in the first aspect, the method further includes: The first device continues to display the second interface within a first time since the first device is disconnected from the second device, where the second interface further includes a fourth option; and in response to an operation performed by the user on the fourth option, the first device displays a sixth interface, where the sixth interface includes the search result of the second device.

In other words, after the first device is disconnected from the second device, the first device does not immediately stop displaying the second interface. Instead, within the first time after the first device is disconnected from the second device, because abstract information of the data of the second device is stored in a data middle platform of the first device, the first device may further continue to display the second interface for the user to view the data (that is, display the sixth interface, also referred to as a grid-view page) of the second device.

In an implementation provided in the first aspect, within the first time, the first device is disconnected from the second device, and the first device has not detected that the first device is disconnected from the second device.

In an implementation provided in the first aspect, the method further includes: When the first device displays the sixth interface, if the first device detects that the connected state between the first device and the second device is switched to the disconnected state, the first device displays a seventh interface, where the seventh interface includes first prompt information, and the first prompt information indicates that the first device is disconnected from the second device. In other words, the first device may be disconnected from the second device on the grid-view page, and the first device displays a disconnection prompt (that is, the first prompt information) when detecting the disconnection from the second device.

In an implementation provided in the first aspect, the sixth interface further includes a fifth option, and the method further includes: In response to an operation performed by the user on the fifth option, if the first device detects that the connected state between the first device and the second device is switched to the disconnected state and the first device can find the second device, the first device displays an eighth interface, where the eighth interface includes the search result of the first device and the reason why the first device is disconnected from the second device is indicated; or if the first device detects that the connected state between the first device and the second device is switched to the disconnected state and the first device cannot find the second device, the first device displays a ninth interface, where the ninth interface includes the search result of the first device and does not include the related information of the second device.

It can be understood that the fifth option may alternatively be understood as a return button. In a case that the first device detects the disconnection from the second device when displaying the grid-view page, the user may return to a search result page (for example, the second interface) by using the fifth option. If the second device can be discovered (that is, the first device can find the second device), the first device may display a reason why the first device is disconnected from the second device after returning to the search result page, so that the user can quickly find out the reason and resolve the problem; or if the second device cannot be discovered (that is, the first device cannot find the second device), the first device does not display any information of the second device after returning to the search result page.

In an implementation provided in the first aspect, the method further includes: In response to an operation performed by the user on a first thumbnail of the second device on the sixth interface, the first device displays a tenth interface, where the tenth interface includes a second thumbnail, the first thumbnail is any one of thumbnails of pictures related to the keyword in the second device, the first thumbnail and the second thumbnail are different sizes of thumbnails of a same picture, and the size of the first thumbnail is less than the size of the second thumbnail; and if the first device detects that the connected state between the first device and the second device is switched to the disconnected state, the first device displays an eleventh interface, where the eleventh interface includes second prompt information, and the second prompt information indicates that the first device is disconnected from the second device.

In other words, the user may select a to-be-viewed thumbnail from the grid-view page. In addition, in response to the operation (for example, an operation on the first thumbnail) of selecting the to-be-viewed thumbnail from the grid-view page by the user, the mobile phone may display the thumbnail with a larger size for the user to view.

In an implementation provided in the first aspect, the tenth interface further includes a sixth option, and the method further includes: In response to an operation performed by the user on the sixth option, if the first device detects that the connected state between the first device and the second device is switched to the disconnected state and the first device can find the second device, the first device displays a twelfth interface, where the twelfth interface includes the search result of the first device and the reason why the first device is disconnected from the second device is indicated; or if the connected state between the first device and the second device is switched to the disconnected state and the first device cannot find the second device, the first device displays a thirteenth interface, where the thirteenth interface includes the search result of the first device and does not include the related information of the second device.

It can be understood that the sixth option may alternatively be understood as a return button. In a case that the first device detects the disconnection from the second device when displaying a large-picture page (namely, the tenth interface), the user may return to the search result page (for example, the second interface) by using the sixth option. If the second device can be discovered (that is, the first device can find the second device), the first device may display a reason why the first device is disconnected from the second device after returning to the search result page, so that the user can quickly find out the reason and resolve the problem; or if the second device cannot be discovered (that is, the first device cannot find the second device), the first device does not display any information of the second device after returning to the search result page.

In an implementation provided in the first aspect, the method further includes: In response to an operation performed by the user on the first thumbnail of the second device on the second interface, the first device displays the tenth interface, where the tenth interface includes the second thumbnail, a copy option, a download option, a sharing option, and an edit option, the first thumbnail is any one of the thumbnails of the pictures related to the keyword in the second device, the first thumbnail and the second thumbnail are different sizes of thumbnails of the same picture, and the size of the first thumbnail is less than the size of the second thumbnail; in response to an operation performed by the user on the copy option, the first device copies the picture corresponding to the second thumbnail; in response to an operation performed by the user on the download option, the first device downloads the picture corresponding to the second thumbnail; in response to an operation performed by the user on the sharing option, the first device shares the picture corresponding to the second thumbnail; and in response to an operation performed by the user on the edit option, the first device displays an interface for editing the picture corresponding to the second thumbnail.

In other words, the user may directly view, on the search result page, a search result (for example, the first thumbnail) on the second device. In addition, in response to an operation of viewing the first thumbnail by the user, the first device may display a larger size of thumbnail of the same picture for the user to view. Moreover, the first device may provide the copy option, the download option, the sharing option, and the edit option for the user to copy, download, share, and edit the picture corresponding to the thumbnail displayed in the interface.

In an implementation provided in the first aspect, the method further includes: In response to an operation performed by the user on the device name of the second device, if the first device is successfully connected to the second device, the first device displays a fourteenth interface, where the fourteenth interface includes abstract information of the data of the second device; and if the first device is not connected to the second device, the first device displays a fifteenth interface, where the fifteenth interface includes a reason why the first device fails to be connected to the second device.

In other words, by tapping the device name of another device (for example, the second device or the third device), the first device may initiate a request of establishing a connection to the another device. If the connection is successfully established, abstract information of data of the another device may be displayed. If the connection is not successfully established, a reason why the connection fails to be established is displayed.

In an implementation provided in the first aspect, a first position in the fourteenth interface includes abstract information of first data, a first position in the sixteenth interface includes abstract information of second data, the sixteenth interface is an interface displayed on the first device in response to the previous operation performed by the user on the device name of the second device, and a position of the abstract information of the first data in the fourteenth interface is the same as a position of the abstract information of the second data in the sixteenth interface. In other words, the first device may record a historical browsing position of the user, and the first device may display data based on the historical browsing position.

In an implementation provided in the first aspect, the method further includes: If the first device detects that data of the second device is updated, the first device displays a seventeenth interface, where the seventeenth interface includes abstract information of the updated data of the second device. In other words, a mobile phone may actively refresh the album page (for example, the seventeenth interface) of the second device when the data of the second device is updated.

According to a second aspect, this application provides an electronic device. The electronic device includes: a memory, a processor, and a display screen. The processor is coupled to the memory and the display screen. The memory is configured to store computer program code. The computer program code includes computer instructions. When the computer instructions are executed by the processor, the electronic device is enabled to perform the method according to any one of the first aspect and the implementations of the first aspect.

According to a third aspect, this application provides a computer-readable storage medium, including computer instructions. When the computer instructions are run on an electronic device, the electronic device is enabled to perform the method according to any one of the first aspect and the implementations of the first aspect.

It may be understood that, for beneficial effects that can be achieved by the electronic device in the second aspect and the computer-readable storage medium in the third aspect, refer to the beneficial effects in the first aspect and any possible implementation of the first aspect. Details are not described herein again.

### BRIEF DESCRIPTION OF DRAWINGS

FIG. 1A is a diagram of a network architecture according to an embodiment of this application;
FIG. 1B is a diagram of another network architecture according to an embodiment of this application;
FIG. 2 is a diagram of a structure of an electronic device according to an embodiment of this application;
FIG. 3 is a block diagram of a software structure of an electronic device according to an embodiment of this application;
FIG. 4A is a diagram of a group of interfaces according to an embodiment of this application;
FIG. 4B is a diagram of a group of interfaces according to an embodiment of this application;
FIG. 5A is a diagram of a group of interfaces according to an embodiment of this application;
FIG. 5B is a diagram of an interface according to an embodiment of this application;
FIG. 6 is a flowchart of updating data according to an embodiment of this application;
FIG. 7 is a diagram of a group of interfaces according to an embodiment of this application;
FIG. 8 is a diagram of a group of interfaces according to an embodiment of this application;
FIG. 9 is a diagram of a group of interfaces according to an embodiment of this application;
FIG. 10 is a diagram of a group of interfaces according to an embodiment of this application;
FIG. 11 is a diagram of a group of interfaces according to an embodiment of this application;
FIG. 12A(1) to FIG. 12A(5) are a diagram of a group of interfaces according to an embodiment of this application;
FIG. 12B is a diagram of a group of interfaces according to an embodiment of this application;
FIG. 13 is a diagram of a group of interfaces according to an embodiment of this application;
FIG. 14A to FIG. 14E are a diagram of a group of interfaces according to an embodiment of this application;
FIG. 15 is a diagram of a group of interfaces according to an embodiment of this application;
FIG. 16 is a diagram of a group of interfaces according to an embodiment of this application; and
FIG. 17 is a flowchart of a distributed data search method according to an embodiment of this application.

### DESCRIPTION OF EMBODIMENTS

The following describes technical solutions in embodiments of this application with reference to the accompanying drawings in embodiments of this application. In descriptions of embodiments of this application, terms used in the following embodiments are only intended to describe particular embodiments, but are not intended to limit this application. As used in this specification and the claims of this application, singular expression forms "a", "described", "foregoing", "the", and "this" are intended to also include a "one or more" expression form, unless clearly indicated to the contrary in the context. It should be further understood that, in the following embodiments of this application, "at least one" and "one or more" mean one, two, or more than two. The term "and/or" is used to describe an association relationship between associated objects, and indicates that three relationships may exist. For example, "A and/or B" may represent the following cases: Only A exists, both A and B exist, and only B exists, where A and B may be singular or plural. The character "/" generally indicates an "or" relationship between associated objects.

As described in this specification, referring to "one embodiment" or "some embodiments" means that particular features, structures, or characteristics described with reference to one or more embodiments of this application are included in the one or more embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner. The term "connection" includes a direct connection and an indirect connection, unless otherwise specified. Terms "first" and "second" are used for descriptive purposes only and should not be construed as indicating or implying relative importance or implicitly indicating a quantity of indicated technical features.

In embodiments of this applications, the term such as "example" or "for example" represents giving an example, an illustration, or a description. Any embodiment or design solution described as "example" or "for example" in embodiments of this application should not be explained as being preferred or advantageous over other embodiments or design solutions. To be precise, use of the term such as "example" or "for example" is intended to present a related concept in a specific manner.

For ease of understanding, the following first describes a system architecture used in embodiments of this application.

The system architecture used in embodiments of this application may include a plurality of electronic devices. The plurality of electronic devices may be networked. The plurality of networked electronic devices may exchange information. Network manners include but are not limited to the following manners.

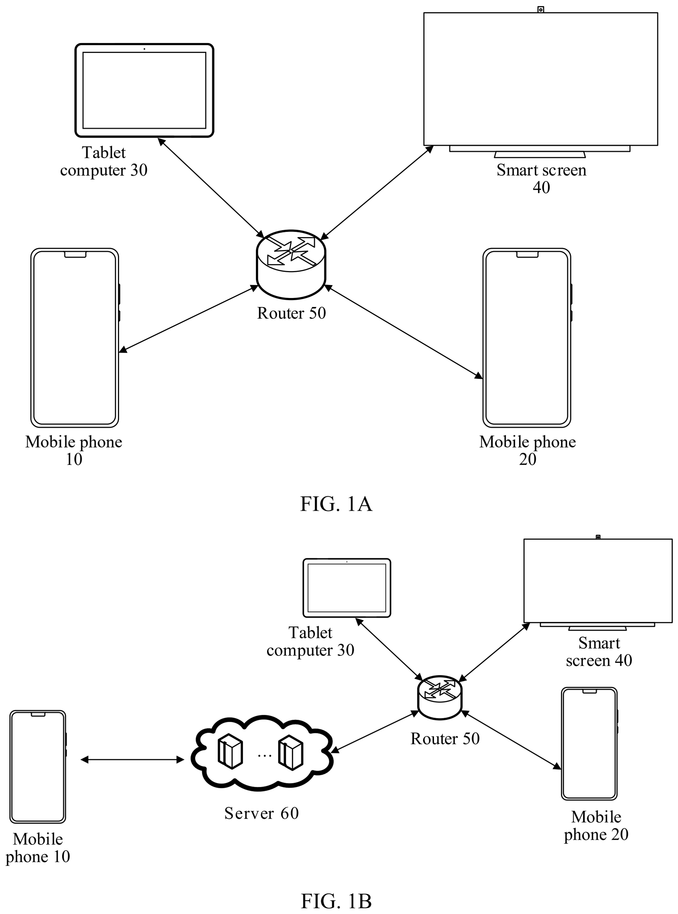

(1) Wi-Fi (wireless fidelity) networking manner: A plurality of electronic devices may access a same routing device (for example, a router). As shown in FIG. 1A, a mobile phone 10, a mobile phone 20, a tablet computer 30, and a smart screen 40 may access a router 50 to form a home network. Alternatively, the plurality of electronic devices may join a same hotspot device (for example, access a hotspot of a same mobile phone). In this case, the information exchange between the plurality of electronic devices may be forwarded by using the hotspot device. For example, the mobile phone 20, the tablet computer 30, and the smart screen 40 may access the mobile phone 10 to form a hotspot network, and the mobile phone 10 may serve as the hotspot device to forward information for each electronic device. Alternatively, the plurality of electronic devices may be networked in a manner such as Wi-Fi P2P or a Wi-Fi direct connection. This is not limited in embodiments of this application.

(2) Cloud server networking manner: The plurality of electronic devices may be connected to a same cloud server. In this case, the information exchange between the plurality of electronic devices may be forwarded by using the cloud server. As shown in FIG. 1B, the mobile phone 20, the tablet computer 30, and the smart screen 40 may access the router 50 to form a home network. The router 50 may be connected to a server 60, the mobile phone 10 may also be connected to the server 60, and the server 60 may serve as a transit device to forward information for the router 50 and the mobile phone 10, that is, the router 50 may exchange information with the mobile phone 10 by using the server 60. The mobile phone 10 may exchange information with electronic devices such as the mobile phone 20, the tablet computer 30, and the smart screen 40 by using the server 60 and the router 50.

In a possible design, the mobile phone 10, the mobile phone 20, the tablet computer 30, the smart screen 40, and the router 50 all may be connected to the server, the server may serve as a transit device to forward information for the mobile phone 10, the mobile phone 20, the tablet computer 30, the smart screen 40, and the router 50. That is, the mobile phone 10, the mobile phone 20, the tablet computer 30, the smart screen 40, and the router 50 may exchange information by using the server.

Alternatively, the plurality of electronic devices may be networked via Bluetooth. For example, the plurality of electronic devices (for example, the mobile phone 20, the tablet computer 30, the smart screen 40, and the router 50) may be connected to a same Bluetooth device (for example, the mobile phone 10). In this case, the information exchange between the electronic devices may be forwarded by using the Bluetooth device.

The plurality of electronic devices may use a plurality of networking manners, for example, may use at least two of a Wi-Fi networking manner, a Bluetooth networking manner, and a cloud server networking manner. This is not limited in this application.

After the plurality of electronic devices are successfully networked, the plurality of electronic devices may perform device authentication. If the device authentication succeeds, the plurality of electronic devices may establish a circle of trust based on the formed network.

In an optional implementation, the plurality of electronic devices may authenticate a login account by using the cloud server. For example, accounts logged in on the mobile phone 10, the mobile phone 20, the tablet computer 30, and the smart screen 40 are trusted by each other. For example, the account logged in on the mobile phone 10 is the same as the account logged in on the mobile phone 20, the tablet computer 30, and the smart screen 40, or is an account with a trust relationship such as an authenticated home account or work group account. In this case, it is determined, based on the account, that the device authentication succeeds, and the mobile phone 10, the mobile phone 20, the tablet computer 30, and the smart screen 40 establish a circle of trust.

In another optional implementation, the mobile phone 10, the mobile phone 20, the tablet computer 30, and the smart screen 40 may alternatively perform device authentication by presetting a password, scanning a code, or using a verification code, to establish a circle of trust.

After the circle of trust is established, the electronic device may access a media resource (which may also be referred to as data) on another electronic device located in a same network. For example, the mobile phone 10 may access resources such as pictures and videos on the mobile phone 20, the tablet computer 30, and the smart screen 40. This means that the resources that can be accessed by the mobile phone 10 are stored, in a distributed form, in other electronic devices in the same network. Not limited to the mobile phone 10, the mobile phone 20, the tablet computer 30, and the smart screen 40 can also access a resource on another electronic device like the mobile phone 10.

It can be understood that the electronic devices communicate with each and exchange resources based on the circle of trust. This can ensure data access security between the devices and reduce a risk of illegal access to the resources.

At present, an electronic device may search for resources on the electronic device and another electronic device that is located in a same circle of trust as the electronic device and that is connected to the electronic device. However, before search, the electronic device needs to be connected to a to-be-searched electronic device in advance. Otherwise, the electronic device cannot find the resource on the another electronic device. Moreover, in addition to the electronic device itself, the electronic device can search for a resource only on one electronic device at a time. If the electronic device needs to search for a resource on another electronic device, the electronic device needs to disconnect from the connected electronic device, and performs a search operation after being connected to the another electronic device. As can be learned, the methods provided by related technologies require the user to perform a plurality of operations. This is relatively complex and affects user experience.

An embodiment of this application provides a distributed data search method. A first device may separately search the first device, a second device, and a third device based on a keyword entered in a search box, to obtain a search result of the first device, a search result of the second device, and a search result of the third device. The first device does not need to be connected to the second device and the third device in advance, and can simultaneously search for data on the second device and the third device, simplifying an operation of searching for the data by the user, and improving user experience.

The first device, the second device, and the third device are all electronic devices. The electronic device may be a device such as a mobile phone, a tablet computer, a television (which may also be referred to as a smart screen), a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, a smart home device, and/or a smart city device. A specific type of the electronic device is not specifically limited in this embodiment of this application.

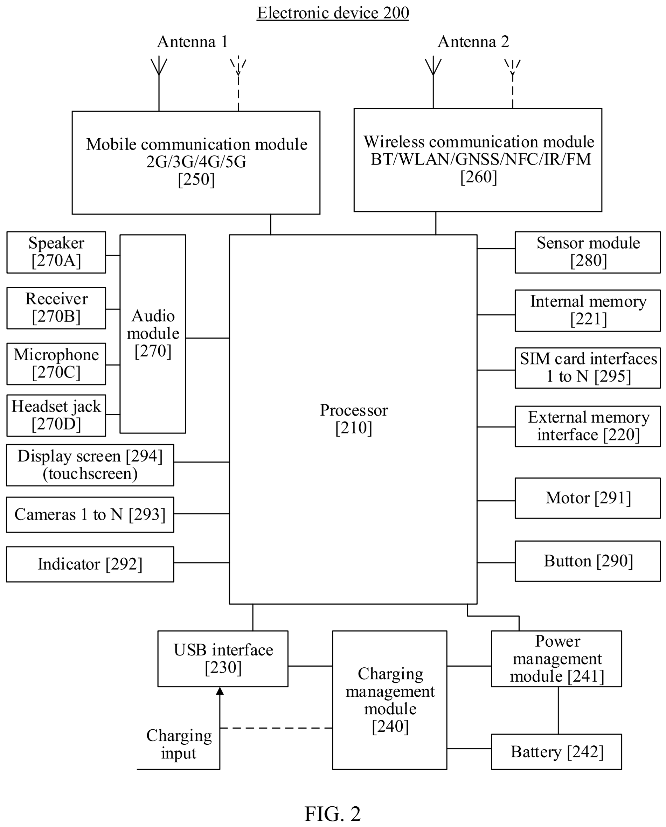

In embodiments of this application, a structure of the electronic device provided in embodiments of this application is described by using an example in which the foregoing electronic device (for example, the mobile phone 10 or the mobile phone 20) is an electronic device 200. As shown in FIG. 2, the electronic device 200 may include: a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like.

The foregoing sensor module 280 may include sensors such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

It may be understood that a structure illustrated in this embodiment does not constitute a specific limitation on the electronic device 200. In some other embodiments, the electronic device 200 may include more or fewer components than those shown in the figure, or some components may be combined, or some components may be split, or different component arrangements may be used. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a neural center and a command center of the electronic device 200. The controller may generate an operation control signal based on instruction operation code and a time sequence signal to control instruction fetching and instruction execution.

A memory may be disposed in the processor 210, and is configured to store instructions and data. In some embodiments, the memory in the processor 210 is a cache. The memory may store instructions or data recently used or cyclically used by the processor 210. If the processor 210 needs to use the instructions or the data again, the processor 210 may directly invoke the instructions or the data from the memory. This avoids repeated access, and reduces a waiting time of the processor 210, so that system efficiency is improved.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that a schematic interface connection relationship between the modules in this embodiment is merely an example for description, and constitutes no limitation on the structure of the electronic device 200. In some other embodiments, the electronic device 200 may alternatively use an interface connection manner different from those in the foregoing embodiments, or use a combination of a plurality of interface connection manners.

The wireless communication module 260 may provide wireless communication solutions for the electronic device 200, including WLAN (for example, wireless fidelity (wireless fidelity, Wi-Fi) network), Bluetooth (bluetooth, BT), global navigation satellite system (global navigation satellite system, GNSS), frequency modulation (frequency modulation, FM), near field communication (near field communication, NFC), infrared (infrared, IR) technology, and the like.

The display screen 294 is configured to display an image, a video, and the like. The display screen 294 includes a display panel.

The external memory interface 220 may be configured to connect to an external memory card, for example, a micro SD card, to extend a storage capability of the electronic device 200. The external storage card communicates with the processor 210 through the external memory interface 220 to implement a data storage function, For example, files such as music and videos are stored in the external storage card.

The internal memory 221 may be configured to store computer-executable program code, and the computer-executable program code includes instructions. The processor 210 runs the instructions stored in the internal memory 221 to perform various functional applications and data processing of the electronic device 200. For example, in embodiments of this application, the processor 210 may perform the instructions stored in the internal memory 221, and the internal memory 221 may include a program storage area and a data storage area.

The program storage area may store an operating system, an application required by at least one function (for example, a sound playing function or an image playing function), and the like. The data storage area may store data (for example, audio data and a phone book) created during use of the electronic device 200. In addition, the internal memory 221 may include a high-speed random access memory, and may further include a non-volatile memory, for example, at least one disk storage device, a flash memory device, and a universal flash storage (universal flash storage, UFS).

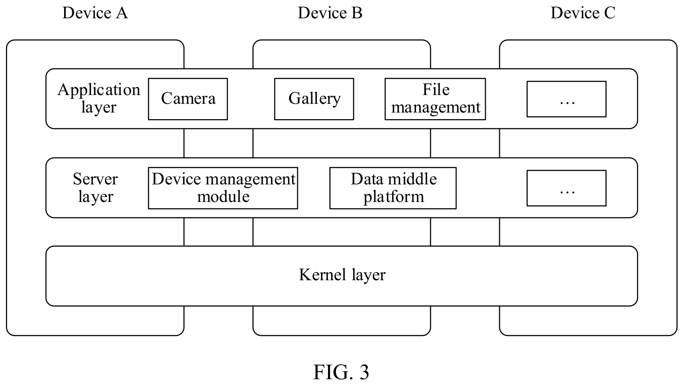

FIG. 3 is a diagram of a software structure of an electronic device 200 according to an embodiment of this application. In a layered architecture, software is divided into several layers, and each layer has a clear role and task. The layers communicate with each other through software interfaces. In some embodiments, software of a device A, a device B, and a device C is divided into three layers. The device A, the device B, and the device C each include an application layer, a server layer, and a kernel layer. It should be noted that the device A, the device B, and the device C each include the application layer, the server layer, and the kernel layer.

As shown in FIG. 3, the application layer may include distributed applications such as a camera, a gallery, and file management.

In this embodiment of this application, the server layer may include a device management module and a data middle platform.

The device management module may store information such as a device name, a device type, a device state, a device capability, and an authentication state of another device. The device name is a name of the another device. The device name may be a Bluetooth name of the another device, an international mobile equipment identity (International Mobile Equipment Identity, IMEI) of the another device, or the like. This is not limited in this application. The device type may include a mobile phone, a tablet, a television, or the like. The device state may be a current state of the another device, and may include a discoverable state and an indiscoverable state. The discoverable state means that a distance between the another device and a current device is within a preset distance, and the current device can find the another device. The indiscoverable state means that a distance between the another device and the current device is beyond the preset distance, or Bluetooth or Wi-Fi of the another device is disabled, or the another device is powered off, and so on, and the current device cannot find the another device.

The device capability indicates whether the another device supports data sharing. The authentication state indicates whether the current device has authenticated the another device and whether the another device is a trusty device.

The data middle platform may be configured to store data of the current device and the another device, for example, pictures and videos. The application layer may invoke data of the data middle platform through a corresponding interface (for example, an SDK interface corresponding to an application), and display data of the another device to a user through a user interface.

The kernel layer includes a kernel (now shown in FIG. 3). Depending on different device types, kernels of different devices may vary. For example, a device A and a device B are respectively a mobile phone and a tablet, and the device C is a notebook computer. In this case, the device A and the device B may use a Linux kernel, and the device C may use a Windows kernel.

A distributed data search method provided in embodiments of this application is described in detail below with reference to the accompanying drawings and by using an example in which a first device is a mobile phone.

It should be noted that the distributed data search method provided in embodiments of this application may be applied to an gallery application, a file management application, a video application, a music application, and the like, to manage and search for a photo or a video in the gallery application, a file in the file management application, a video in the video application, music in the music application, or the like. The distributed data search method provided in embodiments of this application is described by using the gallery application as an example.

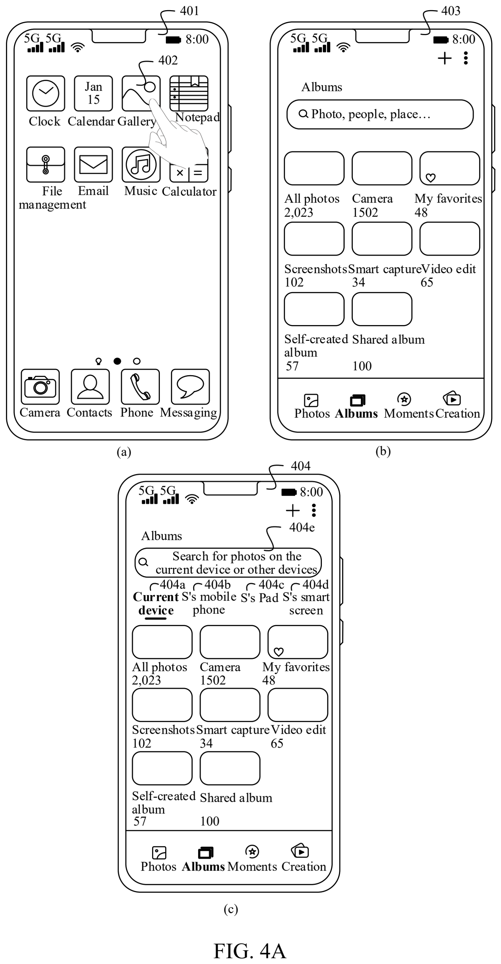

As shown in (a) in FIG. 4A, a mobile phone may display a main interface 401. The main interface may also be referred to as a home screen. The main interface 401 may include an icon 402 of a gallery application. The mobile phone may receive an operation of tapping the icon 402 by a user. In response to the operation, the mobile phone may start the gallery application, and display an interface 403 shown in (b) in FIG. 4A. The interface 403 may also be referred to as an album interface. It should be noted that in response to the operation of tapping the icon 402 by the user, the mobile phone may start the gallery application, and display a photo interface of a gallery. The photo interface includes a thumbnail of a photo or a large picture of a photo in the gallery. In response to an operation performed by the user on an "album" control, the photo interface displays the interface 403.

As shown in (b) in FIG. 4A, the interface 403 includes a plurality of albums. The "all photos" album includes 2023 photos, the "camera" album includes 1502 photos and videos. The "screenshots" album includes 102 photos and videos. The "my favorites" album includes 48 photos and videos. The "smart capture" album includes 34 photos and videos. The "video edit" album includes 65 videos. The "self-created album" includes 57 photos and videos. The "shared album" includes 100 pictures and videos.

In an optional implementation, in response to operation of starting the gallery application by the user, the mobile phone may automatically search for another device located in a same circle of trust around. An example in which the circle of trust includes devices under an account of a user S is used. The mobile phone may detect the devices under the account of the user S whose distance to the current device (that is, the mobile phone) is within a preset distance. For other devices (except the current device) under the account of the user S whose distance to the current device is within the preset distance, the mobile phone may display device names of these devices.

In another optional implementation, before the mobile phone receives the operation of starting the gallery application by the user, the mobile phone may automatically search for another device located in a same circle of trust around. In response to the operation of starting the gallery application by the user, the mobile phone may directly display a device name of the another found device.

For example, in a case that the mobile phone has discovered the another device located in the same circle of trust around, for example, a mobile phone, a Pad, and a smart screen of the user S, in response to the operation of starting the gallery application by the user, the mobile phone may display an interface 404 shown in (c) in FIG. 4A. The interface 404 is similar to the interface 403. A difference lies in that the interface 404 further includes "current device" 404a and a name of another device discovered by the mobile phone, for example, "S's mobile phone" 404b, "S's Pad" 404c, and "S's smart screen" 404d. The "current device" 404a is in a selected state to indicate that albums on the interface 404 are from the current device (that is, the mobile phone). In addition, the interface 404 further includes a search box 404e. The search box 404e may be used by the user to enter a keyword, so that the mobile phone searches for data on the current device and a peer device based on the keyword.

Actually, a quantity of a plurality of electronic devices in a same circle of trust may be large or small. For example, the quantity of the plurality of electronic devices is a small quantity such as 2 or 3; or the quantity of the plurality of electronic devices is a relatively large quantity greater than 3. However, a quantity of electronic devices that may be connected to the mobile phone is limited, and a quantity of options of the electronic devices that can be simultaneously displayed in the album interface is limited. Therefore, options of the electronic devices (for example, the mobile phone, the Pad, and the smart screen of the user S) may be sequentially displayed in the album interface of the mobile phone in an order of discovery times, so that the options of the electronic devices are arranged in a regular pattern in an order of the discovery times to help the user to find a corresponding option.

Herein, it should be noted that before the album interface is displayed, all electronic devices discovered by the mobile phone are considered as being discovered at the same time. For example, all electronic devices discovered in a process in which the mobile phone displays a home screen and a photo interface (where the photo interface includes a local photo) of the gallery application are considered as being discovered at the same time. Only electronic devices discovered by the mobile phone in a process of displaying the album interface are discovered sequentially. Certainly, in the process of displaying the album interface, the mobile phone may alternatively discover at least two electronic devices.

Further, when displaying the album interface, the mobile phone may perform arrangement based on preset device types, and display options of simultaneously discovered electronic devices, so that the options of the simultaneously discovered electronic devices can also be sequentially arranged based on the device types, to further help the user to find a corresponding option from the plurality of simultaneously discovered electronic devices. The device types include a plurality of items in a mobile phone, a tablet, a smart screen, and a PC. The preset device type arrangement may be any sequence combination of the foregoing plurality of device types. For example, the preset device type arrangement is as follows: the mobile phone, the tablet, the PC, and the smart screen.

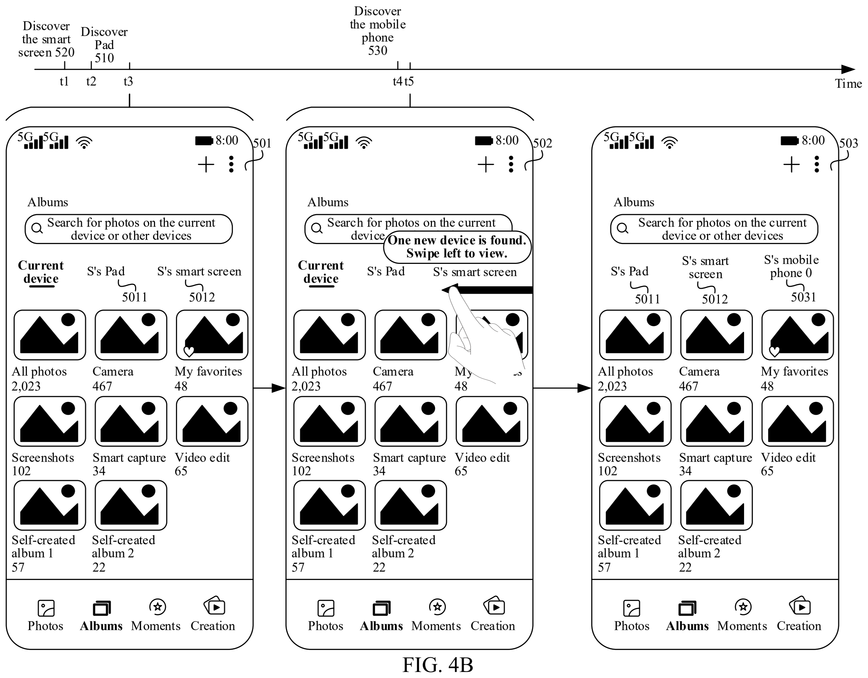

An example in which the preset device type sequence is the mobile phone, the tablet, the PC, and the smart screen is used. Before displaying the album interface (for example, in the process of displaying the photo interface of the gallery application), the mobile phone discovers a smart screen 520 at a time t1, and the mobile phone discovers a tablet 510 at a time t2. That is, the tablet 510 and the smart screen 520 may be considered as being discovered at the same time. At a time t3, in response to an operation of entering the album interface, the mobile phone may display an interface 501 shown in FIG. 4B. The interface 501 is the album interface. In the interface 501, the option "S's Pad" 5011 of the tablet 510 is displayed in front, and the option "S's smart screen" 5012 of the smart screen 520 is displayed in the back. That is, the options of the tablet 510 and the smart screen 520 that are simultaneously discovered are displayed in a sequence of the preset device types. After displaying the interface 501, the mobile phone discovers a mobile phone 530 at a time t4. That is, the mobile phone first discovers the tablet 510 and the smart screen 520, and then discovers the mobile phone 530. At a time t5 after the mobile phone 530 is discovered, the mobile phone may display a interface 502 shown in FIG. 4B. A difference from the interface 501 lies in that the interface 502 includes a prompt "New device discovered. Swipe left to view". Then, in response to an operation of swiping from right to left by the user in the interface 502, the mobile phone may display an interface 503. In the interface 503, after "S's Pad" 5011 and "S's smart screen" 5012, an option "S's mobile phone 0" 5031 of the mobile phone 530 is further displayed. That is, the options of the tablet 510 and the smart screen 520 that are discovered first are displayed in front, and the option of the mobile phone 530 discovered later is displayed in the back.

Furthermore, simultaneously discovered electronic devices may include electronic devices of a same type. If the simultaneously discovered electronic devices include the electronic devices of the same type (briefly referred to as same-type devices), the mobile phone may display options of the same-type devices based on the option names of the same-type devices. For example, arrangement is performed based on English initials of the option names.

The example in which the preset device type sequence is the mobile phone, the tablet, the PC, and the smart screen is still used. The simultaneously discovered electronic devices include the tablet 510 and the smart screen 520, and further include the tablet 540. Therefore, when displaying the options of the tablet 510, the smart screen 520, and the tablet 540, the mobile phone may display the option of the smart screen 520 after the options of the tablet 510 and the tablet 540. In addition, the option name of the tablet 510 is "S's Pad", and the option name of the tablet 540 is "C's tablet". The English initial of "S's Pad" is S, the English initial of "C's tablet" is C, and C is located before S. Therefore, the mobile phone may display the option of the tablet 510 before the option of the tablet 540.

The example in which the preset device type sequence is the mobile phone, the tablet, the PC, and the smart screen, and a quantity of options of electronic devices simultaneously displayed in the album interface of the mobile phone is 3 is still used. If electronic devices simultaneously discovered by the mobile phone include the tablet 510, the tablet 540, the mobile phone 530, and the smart screen 520, the mobile phone may display the option of the tablet 510, the option of the tablet 540, and the option of the mobile phone 530 in the album interface. The option of the mobile phone 530 is located before the option of the tablet 510 and the option of the tablet 540. The option of the tablet 510 and the option of the tablet 540 may be arranged based on English initials of the two devices. In addition, it should be noted that in another implementation, a quantity of electronic devices can be connected to the mobile phone/a quantity of options of electronic devices simultaneously displayed in the album interface may be more. This is not specifically limited herein.

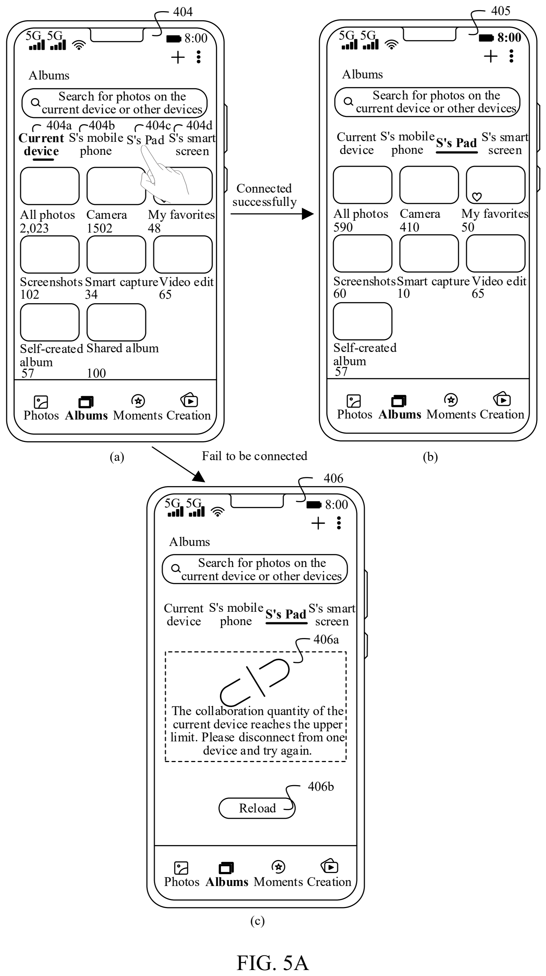

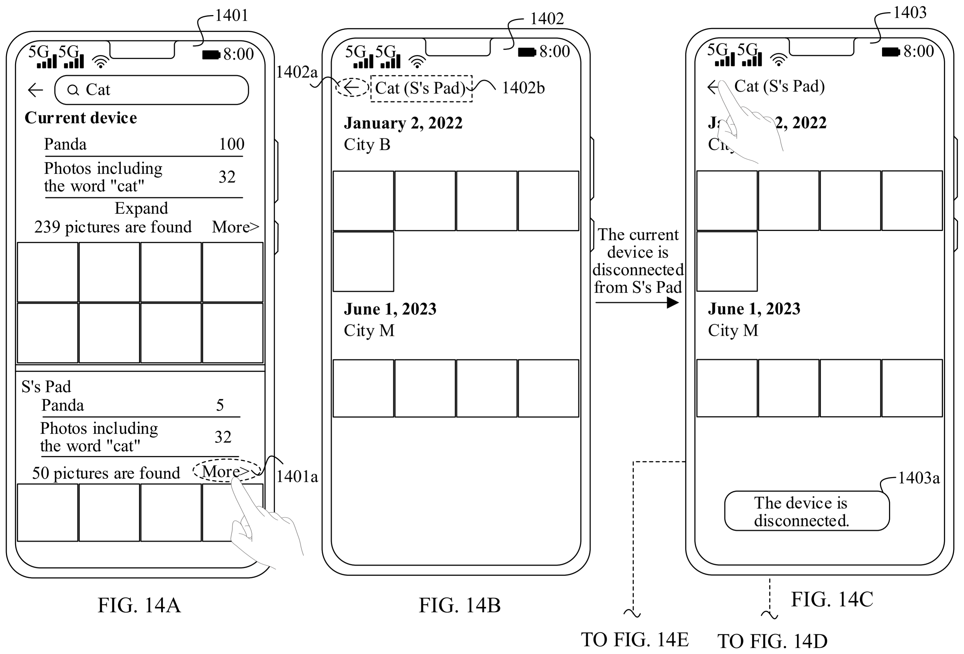

In this embodiment of this application, a user may view an album of a peer device, search for data of a current device and the peer device in an interface of the current device, and so on. The following separately describes the foregoing two scenarios. FIG. 5A to FIG. 13 specifically describe interfaces involved when the user views the album of the peer device in the interface of the current device. FIG. 14A to FIG. 16 specifically describe interfaces involved when the user searches for the data of the current device and the peer device on the current device.

It should be noted that the peer device may be another device other than the current device in a circle of trust, for example, the mobile phone, the Pad, or the smart screen of the user S in the interface 404. The peer device may also be referred to as a second device, a third device, or the like.

In a case that the mobile phone is not connected to the peer device, in response to an operation of tapping the device name of the peer device by the user, the mobile phone may be connected to the peer device. In a case that the mobile phone is not successfully connected to the peer device, the mobile phone may automatically obtain data that is stored on the peer device and that can be shared, and display the data of the peer device, for example, a thumbnail of a photo. In a case that the mobile phone fails to be connected to the peer device, the mobile phone may display a reason for the connection failure.

The following uses an example in which the user taps "S's Pad" 404c to describe, with reference to FIG. 5A, in detail interfaces involved when the user views an album on S's Pad.

As shown in (a) in FIG. 5A, in response to the operation of tapping "S's Pad" 404c by the user, the mobile phone establishes a connection to S's Pad. If the mobile phone is successfully connected to S's Pad, the mobile phone may display an interface 405 shown in (b) in FIG. 5A. "S's Pad" 404c is in the selected state to indicate that albums on the interface 405 are from S's Pad. In addition, the interface 405 may display a plurality of albums from S's Pad. An "all photos" album includes 590 photos and/or video. A "camera" album includes 410 photos and/or videos. A "screenshots" album includes 60 photos and/or videos. A "my favorites" album includes 50 photos and/or videos. A "smart capture" album includes 10 photos and/or videos. A "video edit" album includes 65 videos. A "self-created album" includes 57 photos and/or videos.

If the mobile phone fails to be connected to S's Pad, the mobile phone may display an interface 406 shown in (c) in FIG. 5A. The interface 406 includes a disconnection prompt 406a and a "reload" option 406b. The disconnection prompt 406a indicates a reason for the disconnection failure to the user. The reason for the disconnection failure may be that a quantity of devices connected to a current device or a peer device reaches an upper limit, an abnormality exists in a current device or a peer device, a network is abnormal, a device type of a peer device does not support data sharing of a gallery, and so on.

For example, the disconnection prompt 406a may be any one of prompt information such as "The current device does not support collaboration with "X-type device" currently.", "The collaboration quantity of the current device reaches the upper limit. Please disconnect from one device and try again.", "The collaboration quantity of S's Pad reaches the upper limit. Please disconnect from one device and try again.", "Abnormal connection. Try to restart WLAN and try again.", "Connection fails. Please ensure that the device is nearby and WLAN and Bluetooth are enabled.", "Abnormal connection. Please try again later.", and "Recovering the connected state of the device. Please try again later." Optionally, the disconnection prompt 406a may further include graphics. It should be noted that when both the mobile phone and the peer device have a reason for the connection failure, the mobile phone preferentially displays the reason of the current device, so that the user can quickly troubleshoot a fault.

That a quantity of devices connected to the peer device reaches an upper limit may mean that a quantity of devices that are collaborating with the peer device reaches the upper limit. For example, the peer device can simultaneously collaborate with a maximum of 3 devices. If the peer device is projecting the screen on one device, sharing the keyboard and mouse with another device, or invoking the camera of another device across devices, the peer device cannot collaborate with a fourth device (such as a current device) because the peer device has already collaborated with 3 devices.

The "reload" option 406b is configured to provide a shortcut for reconnecting the current device to the peer device. For example, in response to an operation performed by the user on the "reload" option 406b, the mobile phone is reconnected to S's Pad. It should be noted that reloading not only includes that the current device is reconnected to the peer device, but also includes that the current device obtains, in a case that the current device is connected to the peer device, data that can be shared on the peer device.

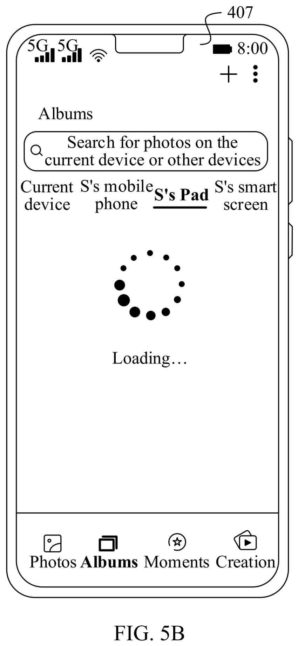

In an optional implementation, before the mobile phone displays the interface 405 or the interface 406, the mobile phone may further display a loading interface indicating that the current device is loading the data of the peer device (for example, S's Pad). For example, the loading interface may be an interface 407 shown in FIG. 5B. The interface 407 may be configured to display a loading animation indicating that the current device is loading the data of the peer device. For example, the loading animation may include a spinning circle. Optionally, the interface 407 may further include progress information indicating a loading progress. For example, the loading progress is 50%, 70%, or the like.

In this embodiment of this application, in a case that the mobile phone is successfully connected to the peer device, if the data of the peer device is updated, the mobile phone may obtain the updated data of the peer device, and display the updated data of the peer device in the album interface of the peer device. The following separately describes a process of obtaining the updated data and a process of displaying the updated data.

The process of obtaining the updated data is as follows:
In a case that the mobile phone is successfully connected to the peer device, the peer device may synchronize the updated data with the current device when the data is updated, so that the current device senses that the data of the peer device is updated.

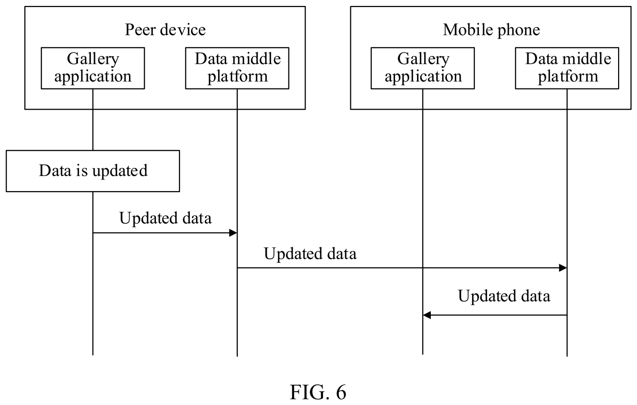

That the data of the peer device is updated may be understood as that pictures/videos that can be shared on the peer device increase, decrease, or are adjusted to another album. As shown in FIG. 6, when the data of the peer device is updated, the peer device may transmit the updated data to a data middle platform of the peer device by using the gallery application of the peer device. Then, the data middle platform of the peer device synchronizes the updated data with a data middle platform of the current device. Next, the data middle platform of the current device notifies the gallery application of the current device that the data of the peer device is updated. In other words, the data middle platform of the current device synchronizes the updated data of the peer device with the gallery application of the current device.

Alternatively, the peer device may periodically synchronize the updated data with the current device, and the mobile phone may periodically synchronize data in the data middle platform of the current device with the gallery application of the current device. For example, in a case that the mobile phone is connected to the peer device, the mobile phone may synchronize data in the data middle platform of the current device with the gallery application of the current device every 10 minutes.

In an optional implementation, if the gallery application is switched to the background, and no data is transmitted between the mobile phone and the peer device for more than a first time, for example, no data of the current device and the peer device is updated for more than the first time, the mobile phone may be disconnected from the peer device. In this way, power consumption caused by a long-time connection between the mobile phone and the peer device can be reduced.

The process of displaying the updated data may at least include the several cases below.
(1) The mobile phone obtains the updated data of the peer device when displaying the album interface (for example, the interface 405 in FIG. 5A) of the peer device. In this case, the mobile phone may refresh the album interface of the peer device in real time, and display the updated data in the album interface of the peer device.
(2) The mobile phone obtains the updated data of the peer device when displaying the album interface of the current device and another interface. In this case, the mobile phone may display the updated data in the album interface of the peer device when receiving the operation of tapping the device name of the peer device by the user.

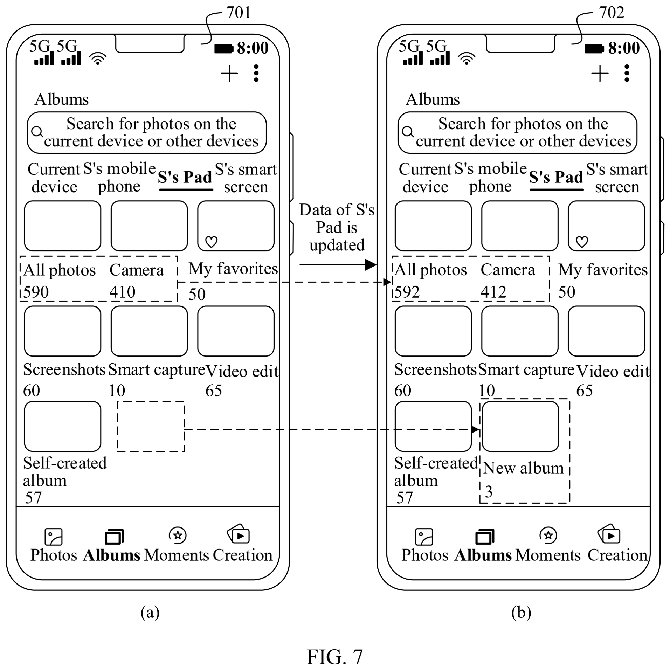

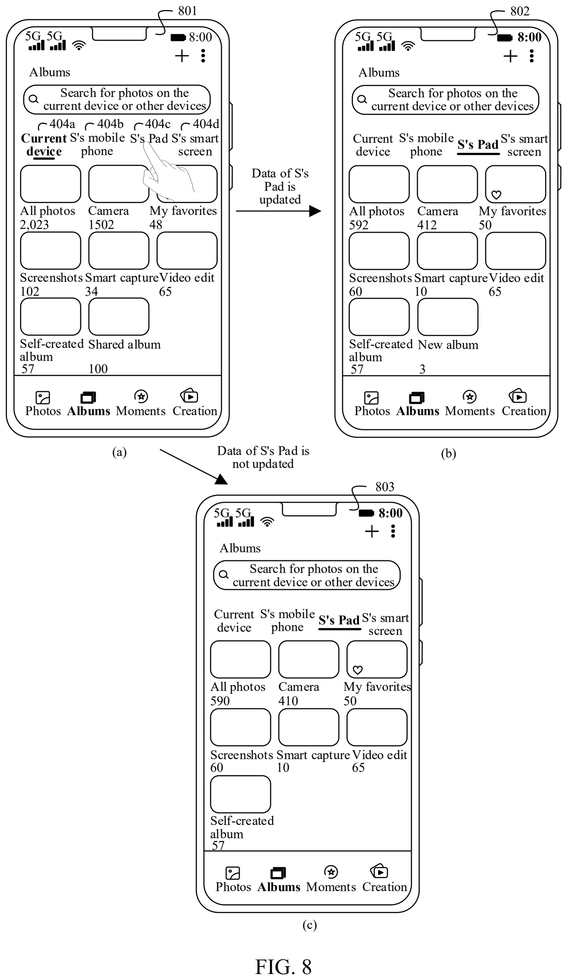

The following separately describes the foregoing two cases based on FIG. 7 and FIG. 8. The peer device is S's Pad shown in FIG. 7 and FIG. 8.

As shown in (a) in FIG. 7, the mobile phone may display the album interface, namely, an interface 701, of S's Pad. If the mobile phone receives the updated data of S's Pad when displaying the interface 701, the mobile phone may display an interface 702 shown in (b) in FIG. 7. The interface 702 is similar to the interface 701, and differences lie in that a quantity of photos stored in S's Pad changes from 590 indicated in the interface 701 to 592 indicated in the interface 702, a quantity of photos obtained by using a camera changes from 410 indicated in the interface 701 to 412 indicated in the interface 702, a "new album" is newly added in the interface 702 compared with the interface 701, and the "new album" includes 3 photos.

As shown in (a) in FIG. 8, the mobile phone may display the album interface of the current device, for example, an interface 801. If the mobile phone receives the updated data of S's Pad when displaying the interface 801, in response to an operation of tapping "S's Pad" 404c by the user, the mobile phone may display an interface 802 shown in (b) in FIG. 8. If the mobile phone has not received the updated data of S's Pad when displaying the interface 801, in response to the operation of tapping "S's Pad" 404c by the user, the mobile phone may display an interface 803 shown in (c) in FIG. 8. As can be learned by comparing the interface 802 and the interface 803, after the data of S's Pad is updated, 2 new photos stored in S's Pad are added, 2 new photos obtained by using the camera are added, and a new album with a name of "new album" and including 3 photos is added in S's Pad. Optionally, if data of an album changes, a cover of the album may change accordingly, for example, change to a thumbnail of a recently added photo.

It should be noted that after the data middle platform of the mobile phone receives the updated data of the peer device, a process in which the gallery application of the mobile phone obtains the updated data of the peer device from the data middle platform of the mobile phone or the data middle platform of the mobile phone sends the updated data of the peer device to the gallery application of the mobile phone further exists. In other words, the gallery application of the mobile phone further needs to load data. Because it takes time for the gallery application to load data, before the mobile phone displays the interface 802, the mobile phone may further display a loading interface to indicate that the mobile phone is loading the data of S's Pad. The loading interface may be similar to the interface 407 shown in FIG. 5B, and details are not described herein again. After the gallery application finishes reloading the data, the interface 802 may be displayed.

In this embodiment of this application, in a case that the mobile phone displays the album interface, the user may swipe up and down on the album interface to adjust an album displayed in the album interface. The mobile phone may record a browsing position (which may be referred to as a historical browsing position in the following) of the user in the album interface. The historical browsing position may be determined based on album distribution and an anchor, and is used to indicate a position of the album that is currently at the anchor among all albums. It should be noted that the historical browsing position only indicates a position, but does not indicate a specific album.

The album distribution indicates a quantity of albums and an arrangement manner of all albums. For example, the arrangement manner of albums may be 3x4, 4x5, or the like, and 3x4 means that the albums are arranged in a manner of 3 rows and 4 columns. It should be noted that the arrangement manner of albums being 3x4 should not be understood as that the device includes 12 albums. Instead, the device may include 10 or 11 albums. This also applies to another arrangement manner.

The anchor may be any position on the album interface, for example, is a first boarder at a first distance from the upper/lower boundary of the album interface. This is not specifically limited herein.

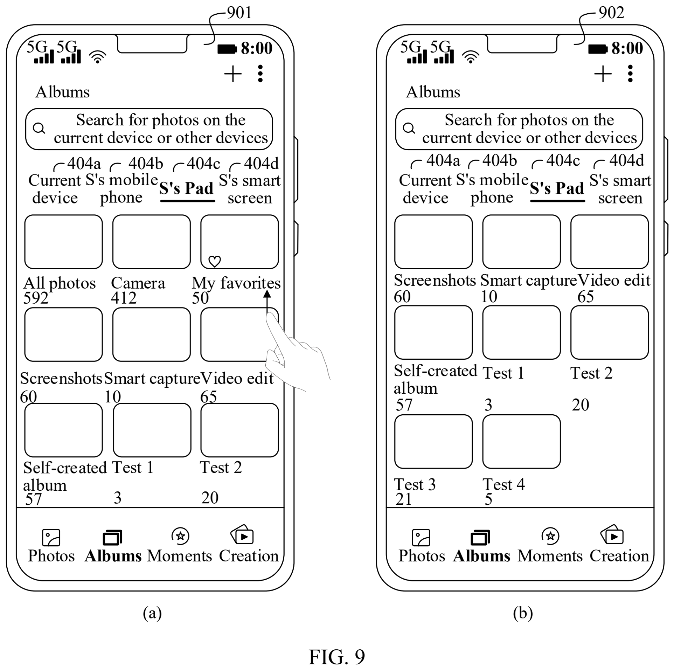

For example, the anchor is at a distance of 100 dpi (dots per inch, dots per inch) from the upper boundary of the album interface, S's Pad includes 11 albums, and the 11 albums are arranged in a manner of 3x4 (that is, 3 columns and 4 rows). In an interface 901 shown in (a) in FIG. 9, albums at a distance of 100 dpi from the upper boundary of the album interface include "all photos", "camera", and "my favorites", so that the historical browsing position is the first row among all albums, to be specific, the row in which the 3 albums "all photos", "camera", and "my favorites" are located. In response to an operation of swiping up the interface 901 by the user, the mobile phone may display an interface 902 shown in (b) in FIG. 9. In the interface 902, albums at a distance of 100 dpi from the upper boundary of the album interface include "screenshots", "smart capture", and "video edit", so that the historical browsing position is the second row among all albums, to be specific, the row in which the 3 albums "screenshots", "smart capture", and "video edit" are located.

In other words, in a case that the user has browsed the album interface of the peer device, the mobile phone may record a browsing position (that is, the historical browsing position) when the user browses the album interface of the peer device. When the mobile phone receives the operation of switching to the album interface of the peer device (for example, the operation of tapping "S's Pad" 404c) again, in response to the operation, the mobile phone may determine a target album based on current album distribution of the peer device and the historical browsing position, and then display the target album at the anchor position of the album interface. In this way, in a case that the mobile phone displays the album interface of the peer device again, the album interface of the peer device still reserves the browsing position before the user switches the interface, to prevent the user from sliding the interface again, improving human-machine interaction efficiency.

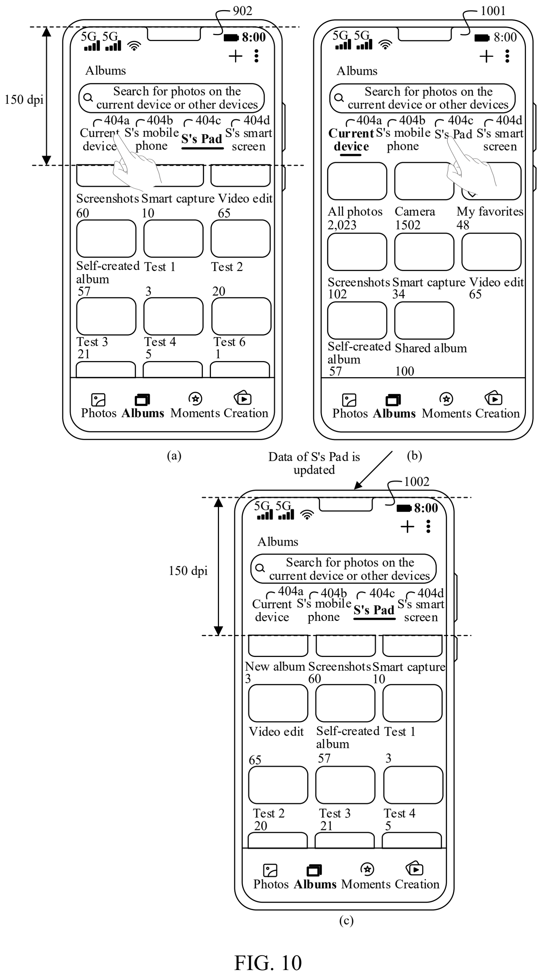

For example, as shown in (a) in FIG. 10, the mobile phone may display the interface 902. An example in which a distance between the anchor position and the upper boundary of the album interface is 150 dpi. In this case, the mobile phone records the historical browsing position corresponding to the interface 902 as the second row among all albums. in response to the operation of tapping "current device" 404a in the interface 902 by the user, the mobile phone may display an interface 1001 shown in (b) in FIG. 10. In response to the operation of tapping "S's Pad" 404c by the user, the mobile phone may display an interface 1002 shown in (c) in FIG. 10. It may be understood that in a case that data of S's Pad is updated, in response to the operation of tapping "S's Pad" 404c by the user, the mobile phone may reload the data from S's Pad. The mobile phone may determine, based on the historical browsing position and the album distribution of S's Pad, that albums at the anchor position in the interface 1002 are albums "new album", "screenshots", and "smart capture" that are currently located at the second row among the albums. Therefore, as can be learned by comparing the interface 1002 with the interface 902, albums at the anchor positions in both the interface 1002 and the interface 902 are in the second row among the albums. However, because the data of S's Pad is updated, the albums at the anchor position in the interface 1002 are different from the albums at the anchor position in the interface 902, to be specific, "new album" is added to the interface 1002.

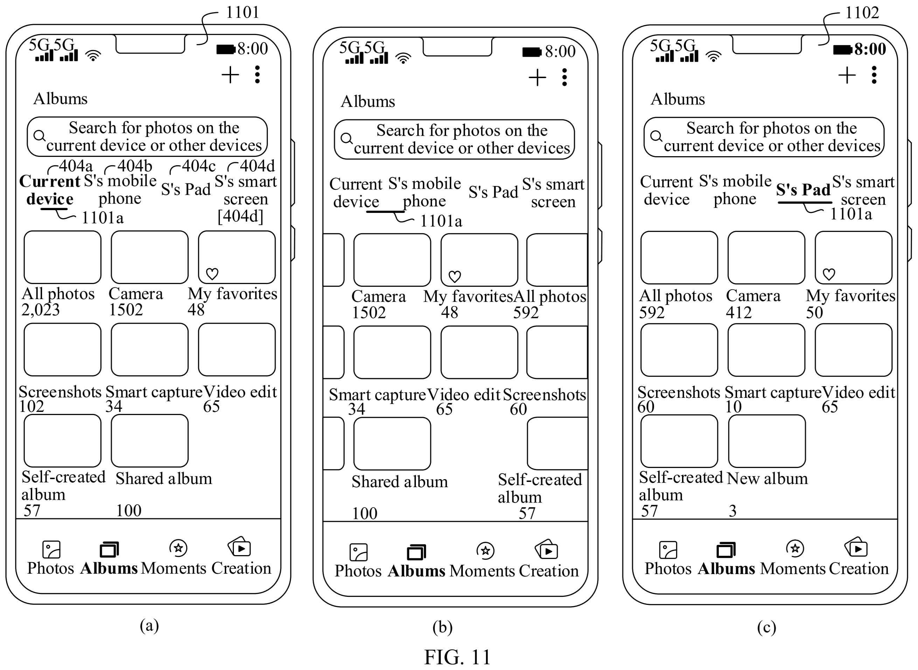

Optionally, to make an interface switching process smooth, when the mobile phone switches from an album interface of one device to an album interface of another device, the mobile phone may further display a transition animation. The transition animation includes an animation in which an album and a selection identifier slide from right to left or slide from left to right. For example, (a), (b), and (c) in FIG. 11 show a process of switching from an interface 1101 to an interface 1102. Albums in the interface gradually change from albums of the current device to albums of S's Pad, and a selection identifier 1101a gradually moves from a position identifying "current device" to a position identifying "S's Pad". It should be noted that a picture shown in an interface 1103 is merely one frame in the transition animation, and is used to illustrate the transition animation. Actually, the transition animation may include a plurality of frames of pictures, and a position of each album and a selection identifier vary in each picture.

It should be noted that the foregoing is merely described by using an example of the process of switching from the album interface of the current device to the album interface of the peer device. Actually, when the album interface of the peer device is switched to the album interface of the current device, whether data of the current device is updated may also be determined, a transition animation may also exist, a historical browsing position may also be recorded, and so on. Logic thereof is the same as logic of switching from the album interface of the current device to the album interface of the peer device. Details are not described herein again.

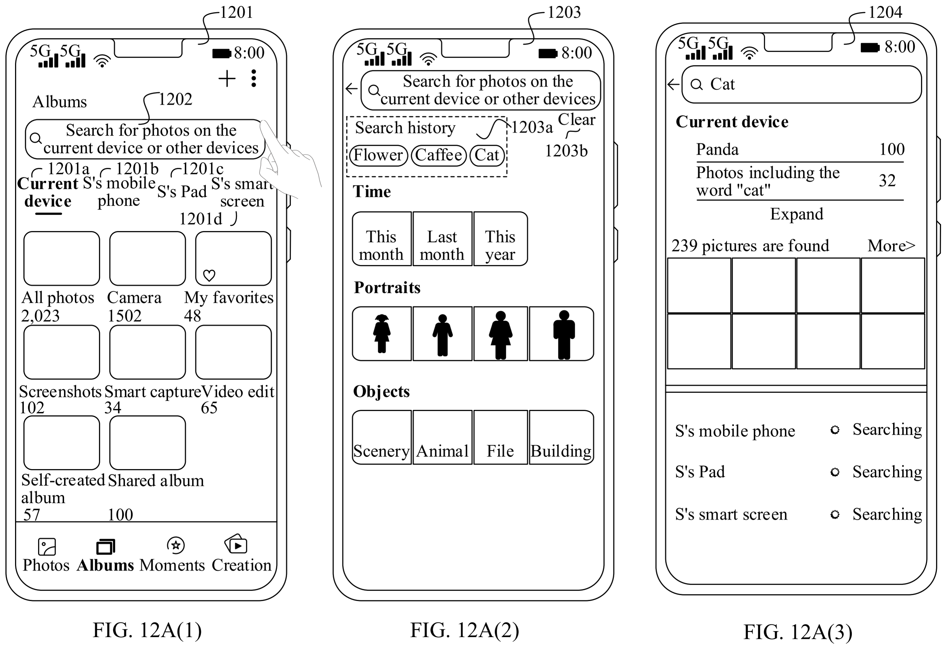

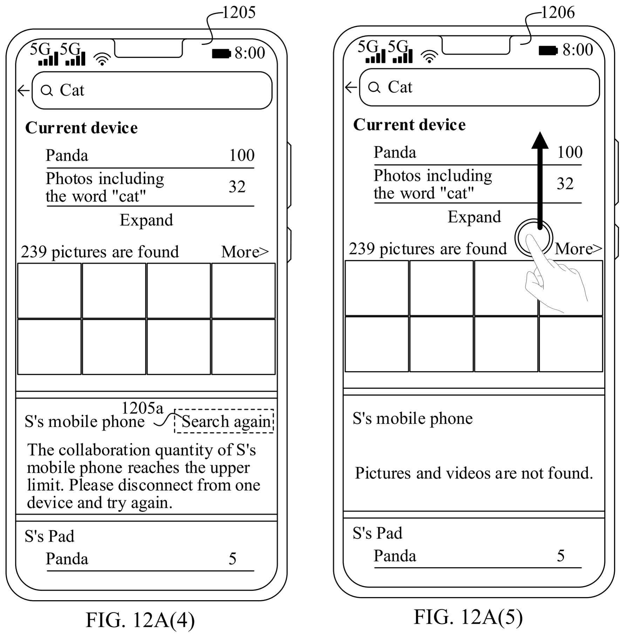

In this embodiment of this application, the mobile phone may further search for data on the current device and/or the peer device. The following provides specific descriptions with reference to FIG. 12A(1) to FIG. 12A(5).

As shown in FIG. 12A(1), a mobile phone may display an album interface 1201 of the current device. The album interface 1201 may include a search box 1202, "S's mobile phone" 1201a, "S's Pad" 1201b, and "S's smart screen" 1201c. The mobile phone may receive an operation of tapping the search box 1202 by a user. In response to the operation, the mobile phone may display an interface 1203 shown in FIG. 12A(2). The interface 1203 may present classification information of photos to the user. For example, in the interface 1203, the mobile phone classifies photos of the current device based on times, portraits, and objects. For example, in terms of time tags, the mobile phone classifies the photos of the current device based on three time tags: "this month", "last month", and "this year". The "this month" album includes photos or videos taken by the mobile phone this month. The "last month" album includes photos or videos taken by the mobile phone last month. The "this year" album includes photos or videos taken by the mobile phone this year. In terms of portrait tags, the mobile phone classifies the photos of the current device based on different people, for example, four different people in the interface 1203. In terms of object tags, the mobile phone classifies and present the photos of the current device based on "scenery", "animal", "file", and "building". It should be noted that the foregoing classification tags may alternatively be other tags. This is not specifically limited herein. In addition, the user can see the classification information without entering a keyword.

Optionally, the interface 1203 may further include a search history 1203a and an option "clear" 1203b. The search history includes keywords that were entered by the user, for example, "flower", "coffee", and "cat". The mobile phone may receive an operation of tapping "clear" 1203b by the user. In response to the operation, the mobile phone may clear the search history. After the mobile phone clears the search history, the interface 1203 no longer displays the keywords that were entered by the user. For example, as shown in FIG. 12A(2), in response to the operation of tapping "clear" 1203b by the user, the interface 1203 of the mobile phone no longer displays the search history 1203a, and the pictures displayed below move upward.

In addition, if a peer device not connected to the mobile phone exists in peer devices displayed in the album interface 1201, in response to an operation of tapping the search box by the user, the mobile phone may establish a connection to all peer devices not connected to the mobile phone in the peer devices displayed in the album interface 1201, to obtain data on the peer devices in advance and perform search quickly based on a keyword in a subsequent search process.

For example, the mobile phone sequentially discovers a total of 4 devices S's mobile phone, S's Pad, S's smart screen, and S's mobile phone 2 when displaying the album interface, but the mobile phone displays only 3 devices S's mobile phone, S's Pad, and S's smart screen in the album interface 1201 based on a time sequence in which the mobile phone discovers the 4 devices.

In the foregoing case, if the mobile phone is not connected to S's mobile phone, S's Pad, and S's smart screen, in response to the operation of tapping the search box 1202 by the user, the mobile phone may be separately connected to S's mobile phone, S's Pad, and S's smart screen.

Still in the foregoing case, if the mobile phone is connected to S's mobile phone, but is not connected to S's Pad and S's smart screen, in response to the operation of tapping the search box 1202 by the user, the mobile phone may be separately connected to S's Pad and S's smart screen.

In response to an operation of entering a keyword "cat" by the user in the search box 1202, the mobile phone may search for data related to the keyword "cat" on the current device and the peer device, and display a search progress in real time. The search progress includes searching and searching finished. Searching means that the mobile phone is searching for data related to the keyword "cat". Searching finished may mean that the mobile phone has obtained a search result, or the mobile phone has not obtained a search result but has stopped searching. That the mobile phone has obtained a search result may be understood as that a picture or video related to the keyword has been found on the device. That the mobile phone has obtained a search result may be understood as that a picture or video related to the keyword has not been found on the device, or the device is not searched because a connection is not established.

It should be noted that search progresses of different devices may be different. For example, before searching for data on the peer device, the mobile phone may further need to be connected to the peer device to obtain the data of the peer device. Therefore, a case that the search progress of the mobile phone is searching finished but the search progress of the peer device is searching may exist. For example, as shown in FIG. 12A(3), the mobile phone may display an interface 1204. The interface 1204 displays the search result of the current device, for example, 239 photos related to "cat" from the current device, indicating that the search progress of the current device is searching finished. The interface 1204 further displays that the search progress of S's mobile phone, S's Pad, and S's smart screen is searching.

Optionally, the search result of the current device further includes an associational word associated with the keyword and classification information for classifying found photos related to the keyword. For example, the mobile phone associates the keyword "cat" with an associational word such as "panda" or a photo including the word "cat", and then classifies found photos based on the associational word. In this way, 100 photos and videos related to "panda" and 32 photos and videos including the word "cat" can be obtained. In response to an operation performed by the user on "panda", the mobile phone may display all photos and videos under the "panda" category.

Optionally, the mobile phone may further perform progressive search based on the keyword. The search result of the current device further includes a search result obtained by the mobile phone by performing the progressive search. The progressive search may be understood as gradually narrowing down a search range. For example, the mobile phone may perform search within a range of "X country", "X city", and "X district" based on the keyword "cat", to respectively obtain photos or videos related to the keyword "cat" in "X country", "X city", and "X district".

In this embodiment of this application, for a device whose search result is obtained, the mobile phone may display the search result of the device in a search result interface; and for a device whose search result is not obtained, the mobile phone may display, in the search result interface, a reason why the search result is not obtained.

For example, when search progresses of all devices are searching finished, the mobile phone may display the search result interface. The search result interface may be an interface 1205 shown in FIG. 12A(4). The interface 1205 displays that the mobile phone has obtained search results of the current device and S's Pad and has not obtained a search result of S's mobile phone. For example, the search result of the current device includes 239 photos related to "cat" from the current device, and the reason that the search result of S's mobile phone is not obtained is that "The collaboration quantity of S's mobile phone reaches the upper limit. Please disconnect from one device and try again." In other words, the mobile phone has not obtained data of S's mobile phone, and has not finished searching. It should be noted that limited by the size of the interface, the interface 1205 shows merely some search results of S's Pad, and does not show whether a search result of S's smart screen is obtained.

In a case that the reason why the mobile phone has not obtained the search result of the peer device is that the current device is not connected to the peer device, the mobile phone 01 may further provide a search again option. For example, the interface 1205 further includes "search again" 1205a, in response to an operation performed by the user on "search again" 1205a, the mobile phone is reconnected to S's mobile phone, so that the mobile phone searches again whether a resource related to the keyword "cat" exists in S's mobile phone.

When the reason why the mobile phone has not obtained the search result of the peer device is that a resource related to the keyword does not exist in the peer device, the mobile phone may not provide the search again option. For example, in an interface 1206 shown in FIG. 12A(5), a search result of S's mobile phone is that "Pictures and videos are not found", and the interface 1206 does not include a "search again" control or icon.

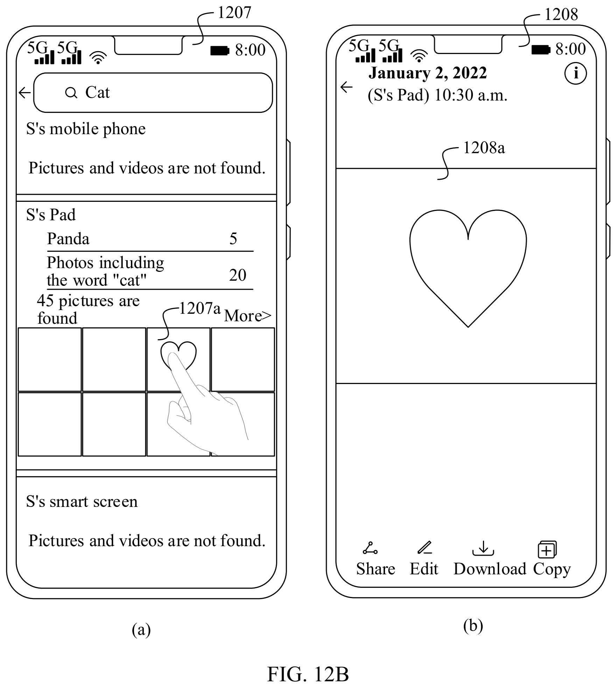

In response to an operation of sliding down the interface 1206 by the user, the mobile phone may display an interface 1207 shown in (a) in FIG. 12B. The interface 1207 includes the search result of S's Pad, to be specific, thumbnails of 45 pictures or videos related to the keyword "cat". For example, the search result of S's Pad includes a thumbnail 1207a. In response to an operation performed by the user on the thumbnail 1207a, the mobile phone may display an interface 1208 shown in (b) in FIG. 12B. The interface 1208 may include a thumbnail 1208a. The thumbnail 1208a and the thumbnail 1207a are different sizes of thumbnails of a same picture, and the size of the thumbnail 1208a is greater than the size of the thumbnail 1207a, and is more convenient for the user to preview. The interface 1208 further includes options such as "share", "edit", "download", and "copy". In response to an operation performed by the user on the options such as "share", "edit", "download", and "copy", the mobile phone may share, edit, download, or copy the photo corresponding to the thumbnail 1207a.

It should be noted that in response to receiving a search operation on a keyword (for example, "cat") entered in the search box, the mobile phone may search for data of the current device based on the keyword, and send a search instruction carrying the keyword to the peer device. After receiving the search instruction, the peer device may perform search based on the keyword to obtain a search result. The search result includes an identifier of a picture or video related to the keyword on the peer device. After the peer device sends the search result to the mobile phone, the mobile phone may display the search result based on the identifier carried in the search result.

In this embodiment of this application, the mobile phone may periodically detect a connected state between the current device and the peer device. If detecting that the connected state between the current device and the peer device changes, the mobile phone may refresh, on the search result interface, content corresponding to each device.

That the connected state between the current device and the peer device changes may include two cases: (1) switching from the disconnected state to the connected state; and (2) switching from the connected state to the disconnected state.

For the foregoing case (1), to be specific, in a case that the mobile phone detects that the disconnected state between the current device and the peer device is switched to the connected state, the mobile phone may search, after being connected to the peer device, the data of the peer device for data related to the keyword. If the data of the peer device includes the data related to the keyword, the mobile phone may display the search result of the peer device on the search result interface. If the data of the peer device does not include the data related to the keyword, the mobile phone may display, on the search result interface, prompt information indicating that the peer device does not include the data related to the keyword.

For the foregoing case (2), to be specific, in a case that the mobile phone detects that the connected state between the current device and the peer device is switched to the disconnected state, the mobile phone may display different content on the search result interface based on a device state of the peer device.

The device state of the peer device includes a discoverable state and an indiscoverable state. The discoverable state means that the peer device and the mobile phone are still in a same network, but are disconnected for some reasons. In this case, the mobile phone can still find the peer device. For example, when the peer device uses another distributed service (for example, mouse sharing, screen projection, or honor sharing), the peer device is disconnected from the current device, and the peer device is in the discoverable state.

The indiscoverable state means that the mobile phone cannot find the peer device. For example, when the peer device is offline because a distance to the current device exceeds a preset distance, Bluetooth or WLAN is disabled, and so on, the peer device is disconnected from the current device, and the peer device is in the indiscoverable state.

If the peer device can be discovered, the mobile phone may display, on the search result interface, a reason why the search result of the peer device is not obtained. If the peer device cannot be found, the mobile phone does not display, on the search result interface, content related to the peer device, for example, deletes the search result of the peer device or displays a reason which the search result of the peer device is not obtained.

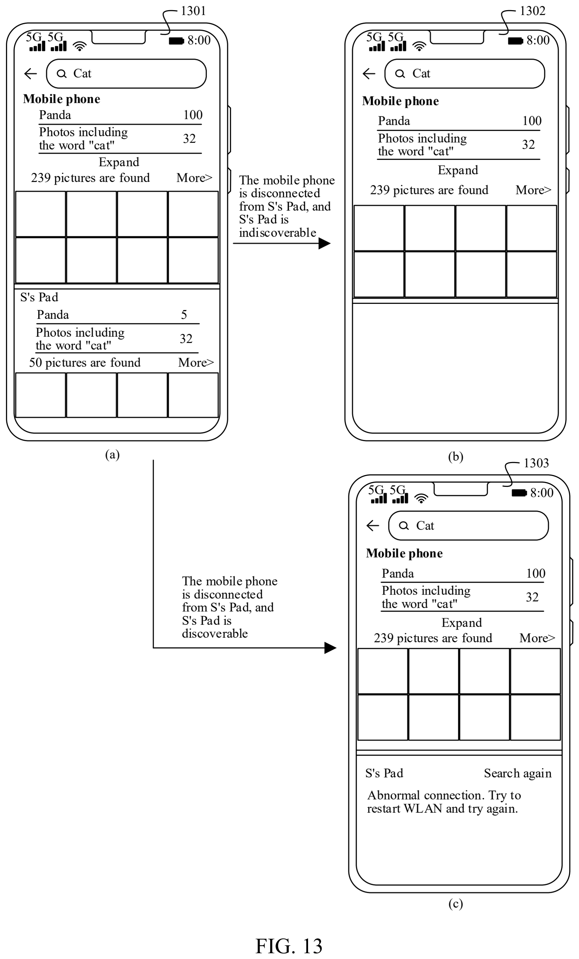

For example, as shown in (a) in FIG. 13, the mobile phone may display an interface 1301. The interface 1301 includes the search results of the current device and S's Pad. If the mobile phone is disconnected from S's Pad, and S's Pad is indiscoverable, the mobile phone may display an interface 1302 shown in (b) in FIG. 13. The interface 1302 is similar to the interface 1301, and a difference lies in that the interface 1302 does not include any content of S's Pad. If the mobile phone is disconnected from S's Pad, and S's Pad is discoverable, the mobile phone may display an interface 1303 shown in (c) in FIG. 13. The interface 1303 is similar to the interface 1301, and a difference lies in that the search result of S's Pad changes from a resource related to the keyword "cat" in the interface 1301 to a reason why the related resource has not been found, for example, "S's Pad is using mouse sharing. Please disconnect and try again."

It should be noted that because the mobile phone periodically detects the connected state between the current device and the peer device, there may be a delay between a first moment at which the connected state between the current device and the peer device actually changes and a second moment at which the mobile phone detects that the connected state between the current device and the peer device changes. In other words, between the first moment and the second moment, the mobile phone is actually disconnected from the peer device but the mobile phone has not detected that the current device is disconnected from the peer device. In this case, because the data middle platform of the current device stores the data of the peer device, the mobile phone still can maintain the previously displayed search result interface and can normally respond to an operation of viewing a photo or a video of the peer device by the user.

For example, as shown in FIG. 14A and FIG. 14B, when the mobile phone displays an interface 1401, the mobile phone is disconnected from the peer device, but the mobile phone has not detected that the mobile phone is disconnected from the peer device. In this case, the mobile phone may continue to display the interface 1401. In addition, in response to an operation of tapping an option "more" 1401a by the user, the mobile phone may normally display an interface 1402.

As can be learned, when detecting that the connected state between the current device and the peer device changes, the mobile phone may refresh a search result page. The search result page displays different content based on a state of the peer device. Therefore, the user may learn of a disconnection reason quickly based on the search result page.

In this embodiment of this application, the mobile phone may further be disconnected from the peer device when displaying a picture selection interface (which may also be referred to as a grid-view page) or a large-picture interface (which may also be referred to as a large-picture page). If the mobile phone is disconnected from the peer device when displaying the picture selection interface or the large-picture interface, the mobile phone may display a disconnection prompt on a corresponding interface to prompt the user.

With reference to FIG. 14A to FIG. 15, the following first describes interfaces involved when the grid-view page is disconnected.

For example, as shown in FIG. 14A, the mobile phone may display the interface 1401. The interface 1401 includes search results of the current device and S's Pad and the option "more" 1401a corresponding to the search result of S's Pad. In response to the operation performed by the user on the option "more" 1401a, the mobile phone may display the interface 1402 shown in FIG. 14B. The interface 1402 is configured to display photos or videos related to the keyword on S's Pad. Optionally, the photos or videos may be classified based on times. In addition, the interface 1402 further includes a return button 1402a and a title 1402b. In response to an operation performed by the user on the return button 1402a, the mobile phone may display the interface 1401 again. The title 1402b includes a keyword and a resource source. For example, the title 1402b is "cat (S's Pad)", indicating that photos and videos displayed on the interface 1402 are from S's Pad and are related to the keyword "cat".

When the mobile phone displays the interface 1402, if the mobile phone is disconnected from S's Pad, the mobile phone may display an interface 1403 shown in FIG. 14C. The interface 1403 is similar to the interface 1402, and a difference lies in that the interface 1403 includes a disconnection prompt 1403a. The disconnection prompt 1403a indicates that the current device is disconnected from S's Pad, for example, is "The device is disconnected."

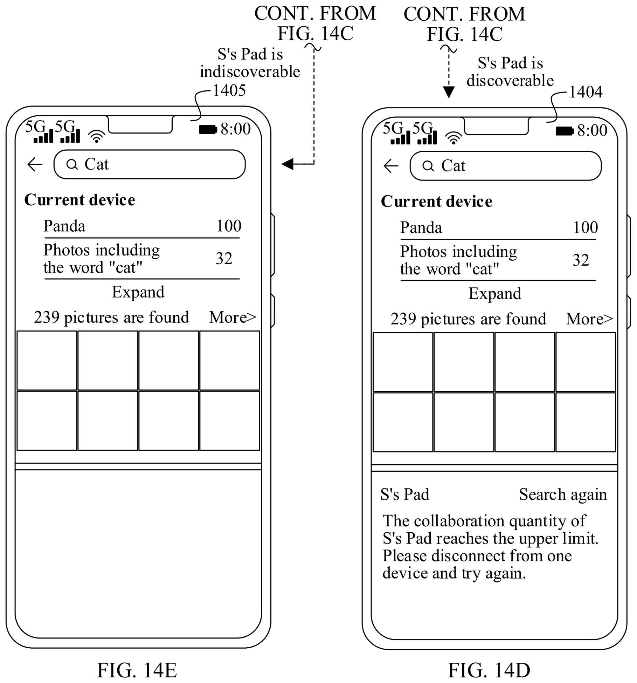

In response to the operation performed by the user on the return button 1402a, the mobile phone may determine whether the state of the peer device (that is, S's Pad) is the discoverable state or the indiscoverable state. If the peer device is in the discoverable state, the mobile phone may display an interface 1404 shown in FIG. 14D. The interface 1404 is similar to the interface 1401, and a difference lies in that the search result of S's Pad changes from photos in the interface 1401 to a disconnection prompt in the interface 1404, for example, "The collaboration quantity of S's Pad reaches the upper limit. Please disconnect from one device and try again."

If the peer device is in the indiscoverable state, the mobile phone may display an interface 1405 shown in FIG. 14E. The interface 1405 does not include related content of S's Pad.

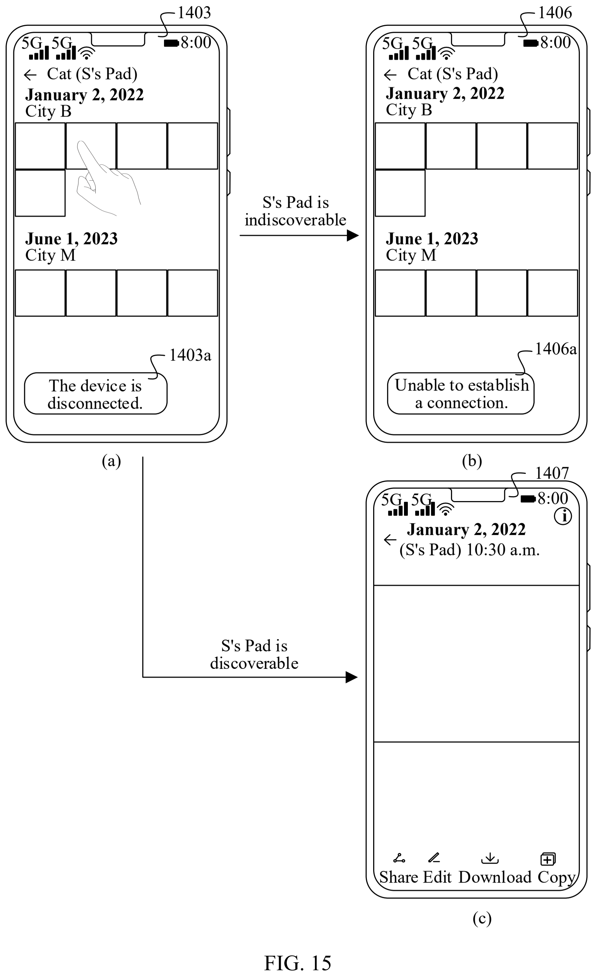

As shown in (a) in FIG. 15, in response to an operation performed by the user on a thumbnail of any photo in the interface 1403, the mobile phone may determine whether the state of the peer device (that is, S's Pad) is the discoverable state or the indiscoverable state. If the peer device is in the indiscoverable state, the mobile phone may display an interface 1406 shown in (b) in FIG. 15. The interface 1406 includes prompt information 1406a. The prompt information 1406a indicates that the current device cannot be connected to S's Pad, for example, is "Unable to establish a connection."

If the peer device is in the discoverable state, the mobile phone may be reconnected to the peer device, and display, after the reconnection is successfully established, an interface 1407 shown in (c) in FIG. 15. The interface 1407 is configured to display a larger size of a thumbnail of a photo selected by the user, and options such as share, edit, save, and copy.

It should be noted that in a case that the mobile phone is connected to the peer device, in response to an operation performed by the user on a thumbnail of any photo in the interface 1403, the mobile phone may not need to determine whether the state of the peer device is the discoverable state or the indiscoverable state, and directly displays the interface 1406.

It should further be noted that when the mobile phone displays the interface 1402, the mobile phone is disconnected from the peer device, but the mobile phone has not detected that the mobile phone is disconnected from the peer device. In this case, the mobile phone may continue to display the interface 1402, that is, does not display the disconnection prompt 1403a. In addition, the mobile phone may normally respond to an operation of viewing a large picture by the user (for example, an operation of taping any photo in the interface 1402 by the user).

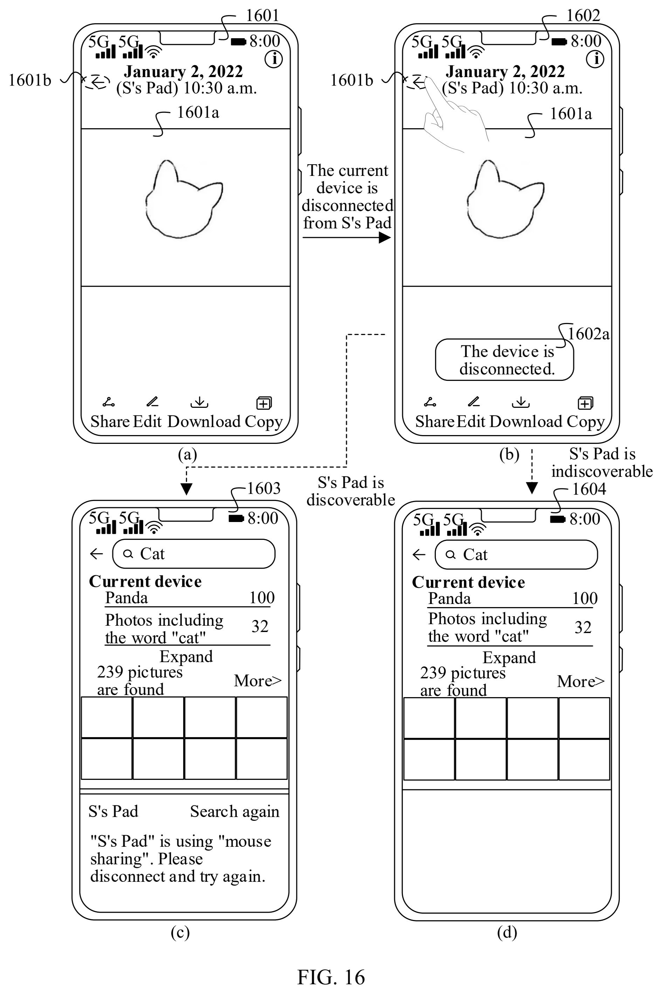

With reference to FIG. 16, the following describes interfaces involved when the large-picture page is disconnected.

As shown in (a) in FIG. 16, the mobile phone may display an interface 1601. The interface 1601 includes a thumbnail 1601a and options such as share, edit, save, and copy. In response to an operation performed by the user on the options such as share, edit, save, and copy, the mobile phone may perform operations such as sharing, editing, saving, and copying on the photo corresponding to the thumbnail 1601a. In addition, the interface 1601 further includes a return button 1601b and a title. In response to an operation performed by the user on the return button 1601b, the mobile phone may display the picture selection interface (for example, the interface 1402 in FIG. 14B) again. The title includes a resource source, for example, "S's Pad", indicating that the thumbnail 1601a is from S's Pad.

If the mobile phone is disconnected from the peer device (that is, S's Pad), the mobile phone may display the interface 1602 shown in (b) in FIG. 16. The interface 1602 includes a disconnection prompt 1602a. The disconnection prompt 1602a indicates that the current device is disconnected from S's Pad, for example, is "The device is disconnected."

In response to the operation performed by the user on the return button 1601b, the mobile phone may determine whether the state of the peer device (that is, S's Pad) is the discoverable state or the indiscoverable state. If the peer device is in the discoverable state, the mobile phone may display an interface 1603 shown in (c) in FIG. 16. The interface 1603 includes a search again control and prompt information of S's Pad, for example, "S's Pad is using mouse share. Please disconnect and try again".

If the peer device is in the indiscoverable state, the mobile phone may display an interface 1604 shown in (d) in FIG. 16. The interface 1604 does not include related content of S's Pad.

If the user still wants to perform operations such as sharing, editing, saving, and copying on the photo corresponding to the thumbnail 1601a, in response to the operations performed by the user on the options such as share, edit, save, and copy, the mobile phone can also determine whether the state of the peer device (that is, S's Pad) is the discoverable state or the indiscoverable state. If the peer device is in the indiscoverable state, the mobile phone may display the prompt information to indicate that the current device cannot be connected to S's Pad. If the peer device is in the discoverable state, the mobile phone may be reconnected to the peer device, and perform, after the reconnection is successfully established, a corresponding operation on the photo corresponding to the thumbnail 1601a.

It should be noted that when the mobile phone displays the interface 1601, the mobile phone is disconnected from the peer device, but the mobile phone has not detected that the mobile phone is disconnected from the peer device. In this case, the mobile phone may continue to display the interface 1601, that is, does not display the disconnection prompt 1602a. In addition, the mobile phone may normally respond to operations of copying a picture by the user and returning to the search result page.

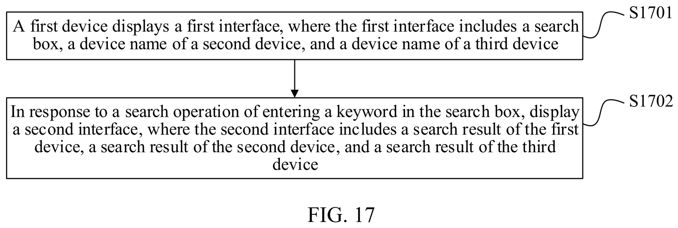

FIG. 17 is a flowchart of a distributed data search method according to an embodiment of this application. The method may be applied to a first device. The first device and a second device are connected to a same network. The first device is, for example, the mobile phone in the foregoing embodiments. The first device may alternatively be a Pad, a PC, or the like. This is not limited in this embodiment of this application. The second device is, for example, the peer device in the foregoing embodiments, for example, S's mobile phone, S's Pad, or S's smart screen.

As shown in FIG. 17, the method includes the following steps.

S1701: The first device displays a first interface, where the first interface includes a search box, a device name of the second device, and a device name of a third device.

In an optional implementation, the first interface is an album interface of a gallery application, or may be an interface of a distributed application such as a file management application.

For example, the first interface is the interface 404 in FIG. 4A or the interface 1201 in FIG. 12A(1), the search box is the search box 404e in the interface 404 or the search box 1202 in the interface 1201, and the device name of the second device or the device name of the third device is "S's Pad" or "S's mobile phone".

S1702: In response to a search operation of entering a keyword in the search box, display a second interface, where the second interface includes a search result of the first device, a search result of the second device, and a search result of the third device.

The second interface is a search result interface, for example, is the interface 1205 in FIG. 12A(4) or the interface 1206 in FIG. 12A(5) or the interface 1301 in FIG. 13. The keyword may be any word entered by a user, for example, "cat".

The search result of the first device includes data related to the keyword in the first device, for example, is content related to "current device" in the interface 1205 and the interface 1206.

The search result of the second device includes data related to the keyword in the second device or prompt information of the second device, and the prompt information of the second device indicates a reason why the data related to the keyword is not found in the second device.

For example, in a case that the search result of the second device includes the data related to the keyword in the second device, the second interface may be the interface 1301 in FIG. 13 or the interface 1206 in FIG. 12A(5), and the search result of the second device may include data related to the keyword in "S's Pad".

For example, in a case that the prompt information of the second device indicates that the second device does not include the data related to the keyword, the second interface may be the interface 1206, and the prompt information of the second device is, for example, "Pictures and videos are not found." of "S's mobile phone" in the interface 1206.

For example, in a case that the prompt information of the second device indicates a reason why the first device fails to connect to the second device, the second interface may be the interface 1205, and the prompt information of the second device is, for example, "The collaboration quantity of S's mobile phone reaches the upper limit. Please disconnect from one device and try again." in the interface 1205. In this case, the second interface further includes a second option, and in response to an operation performed by the user on the second option, the first device establishes a connection to the second device, and searches for the data of the second device based on the keyword after being connected to the second device. For example, the second option may be "search again" 1205a in the interface 1205.

In an optional implementation, that the first device displays the first interface includes: In response to an operation of opening a gallery application by the user, the first device displays a third interface, where the third interface includes a first option; and in response to an operation performed by the user on the first option, the first device displays the first interface, where the first interface further includes an album of the first device. In other words, the first interface may be the album interface of the gallery application.

In an optional implementation, in a case that the search result of the second device includes the data related to the keyword in the second device (that is, a thumbnail of a picture related to the keyword in the second device), the first device may detect a connected state between the first device and the second device. If the first device detects that the connected state between the first device and the second device is switched to a disconnected state, and the first device can find the second device, the first device displays a fourth interface. The fourth interface includes the search result of the first device and a reason why the first device is disconnected from the second device. If the first device detects that the connected state between the first device and the second device is switched to the disconnected state, and the first device cannot find the second device, the first device displays a fifth interface. The fifth interface includes the search result of the first device, and does not include related information of the second device.

For example, the fourth interface is the interface 1303 in FIG. 13, and the reason why the first device is disconnected from the second device is "Abnormal connection. Try to restart WLAN and try again." in the interface 1303. In another implementation, the reason why the first device is disconnected from the second device may be another reason. This is not specifically limited herein.

For example, the fifth interface is the interface 1302 in FIG. 13, and the interface 1302 does not include any information of "S's Pad".

In an optional implementation, the fourth interface further includes a third option, and the third option is used to trigger the first device to establish a connection to the second device. For example, the third option may be the "search again" option in the interface 1303.

In an optional implementation, the second interface further includes a fourth option. In response to an operation performed by the user on the second option, the first device displays a sixth interface, where the sixth interface includes a thumbnail of a photo related to the keyword of the second device. For example, the fourth option is the option "more" 1401a in the interface 1401, and the sixth interface is the interface 1402.

The first device may continue to display the second interface within a first time since the first device is disconnected from the second device, and display the sixth interface in response to the operation performed by the user on the second option. Within the first time, the first device is disconnected from the second device, and the first device has not detected that the first device is disconnected from the second device. In other words, because the data of the second device exists in a data middle platform of the first device, in a case that the first device has not detected that the first device is disconnected from the second device, but the first device is actually disconnected from the second device, the first device still can operate the data of the second device, and does not lose control of the data immediately.

When the first device displays the sixth interface, if the first device detects that the connected state between the first device and the second device is switched to the disconnected state, the first device displays a seventh interface, where the seventh interface includes first prompt information, and the first prompt information indicates that the first device is disconnected from the second device.

For example, the seventh interface is the interface 1403, and the first prompt information is the disconnection prompt 1403a in the interface 1403.

In an optional implementation, the sixth interface further includes a fifth option. In response to an operation performed by the user on the fifth option, if the first device detects that the connected state between the first device and the second device is switched to the disconnected state and the first device can find the second device, the first device displays an eighth interface, where the eighth interface includes the search result of the first device and the reason why the first device is disconnected from the second device is indicated. If the first device detects that the connected state between the first device and the second device is switched to the disconnected state and the first device cannot find the second device, the first device displays a ninth interface, where the ninth interface includes the search result of the first device and does not include the related information of the second device.

For example, the fifth option is the return button 1402a in the interface 1402, the eighth interface is the interface 1404 in FIG. 14D, and the ninth interface is the interface 1405 in FIG. 14E.

In an optional implementation, the method further includes: In response to an operation performed on a first thumbnail on the sixth interface, the first device displays a tenth interface, where the tenth interface includes a second thumbnail, the first thumbnail is any one of thumbnails of pictures related to the keyword in the second device, the first thumbnail and the second thumbnail are different sizes of thumbnails of a same picture, and the size of the first thumbnail is less than the size of the second thumbnail.

For example, the first thumbnail may be the thumbnail tapped by the user in the interface 1403. The tenth interface is, for example, the interface 1407 or the interface 1601. The second thumbnail is, for example, the thumbnail displayed in the interface 1407 or the thumbnail 1601a displayed in the interface 1601.

When the first device displays the tenth interface, if the first device detects that the connected state between the first device and the second device is switched to the disconnected state, the first device displays an eleventh interface, where the eleventh interface includes second prompt information, and the second prompt information indicates that the first device is disconnected from the second device.

For example, the eleventh interface is the interface 1602, and the second prompt information is the disconnection prompt 1602a in the interface 1602.

In an optional implementation, the tenth interface further includes a sixth option, and the method further includes: In response to an operation performed by the user on the sixth option, if the first device detects that the connected state between the first device and the second device is switched to the disconnected state and the first device can find the second device, the first device displays a twelfth interface, where the twelfth interface includes the search result of the first device and the reason why the first device is disconnected from the second device is indicated. If the first device detects that the connected state between the first device and the second device is switched to the disconnected state and the first device cannot find the second device, the first device displays a thirteenth interface, where the thirteenth interface includes the search result of the first device and does not include the related information of the second device.

For example, the fourth option is the interface 1602 or the return button 1601b in the interface 1601, the twelfth interface is the interface 1603, and the thirteenth interface is the interface 1604.

In an optional implementation, the method further includes: In response to an operation performed by the user on the device name of the second device, if the first device is connected to the second device, the second device displays a fourteenth interface, where the fourteenth interface includes abstract information of the data of the second device; and if the first device is not connected to the second device, the second device displays a fifteenth interface, where the fifteenth interface includes a disconnection prompt, indicating a reason why the first device fails to be connected to the second device.

For example, the fourteenth interface is the interface 405 in FIG. 5A or the interface 902 or the interface 1002 in FIG. 10. The fifteenth interface is, for example, the interface 406, and the disconnection prompt is, for example, the disconnection prompt 406a in the interface 406.

In an optional implementation, a first position in the fourteenth interface includes abstract information of first data, a first position in the sixteenth interface includes abstract information of second data, the sixteenth interface is an interface displayed on the first device in response to the previous operation performed by the user on the device name of the second device, and a position of the abstract information of the first data in the fourteenth interface is the same as a position of the abstract information of the second data in the sixteenth interface.

In an optional implementation, the method further includes: In a case of detecting that data of the second device is updated, the first device displays the sixteenth interface, where the sixteenth interface includes abstract information of the updated data of the second device.

For example, the sixteenth interface is the interface 702 in FIG. 7.

An embodiment of this application further provides an electronic device. The electronic device includes: a memory, a processor, and a display screen. The processor is coupled to the memory and the display screen. The memory is configured to store computer program code. The computer program code includes computer instructions. When the computer instructions are executed by the processor, the electronic device is enabled to perform the method provided in any one of the foregoing embodiments.

An embodiment of this application further provides a computer-readable storage medium, including computer instructions. When the computer instructions are run on an electronic device, the electronic device is enabled to perform the method provided in any one of the foregoing embodiments.

An embodiment further provides a computer program product. When the computer program product runs on an electronic device, the electronic device is enabled to perform various functions or steps in the foregoing method embodiments.

In addition, an embodiment of this application further provides an apparatus. The apparatus may be a chip, a component, or a module. The apparatus may include a processor and a memory that are connected. The memory is configured to store computer-executable instructions. When the apparatus runs, the processor may execute the computer-executable instructions stored in memory, so that the chip performs various functions or steps performed by the mobile phone in the foregoing method embodiments.

The electronic device, communication system, computer-readable storage medium, computer program product, or chip provided in embodiments is configured to perform the corresponding methods provided above. Therefore, for beneficial effects that can be achieved, refer to the beneficial effects in the corresponding methods provided above. Details are not described herein again.

Based on the foregoing descriptions of the implementations, a person skilled in the art may clearly understand that for convenience and ease of description, division into the foregoing functional modules is merely used as an example for illustration. In actual application, the foregoing functions may be allocated to different functional modules for implementation based on needs. To be specific, an inner structure of an apparatus is divided into different functional modules to implement all or some of the functions described above.

In the several embodiments provided in this application, it should be understood that the disclosed apparatuses and methods may be implemented in other manners. For example, the apparatus embodiment described above is merely an example. For example, the division into the modules or units is merely logical division. During actual implementation, other division manners may exist. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may be one or more physical units, may be located in one place, or may be distributed in different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

Finally, it should be noted that the foregoing embodiments are merely intended to describe the technical solutions of this application, but not to limit this application. Although this application is described in detail with reference to the foregoing embodiments, a person of ordinary skill in the art should understand that modifications or equivalent replacements may be made to the technical solutions of this application, without departing from the spirit and scope of the technical solutions of this application.

## Claims

1. A distributed data search method, applied to a first device, wherein the method comprises:
displaying, by the first device, a first interface, wherein the first interface comprises a search box, a device name of a second device, and a device name of a third device; and
in response to a search operation of entering a keyword in the search box, displaying a second interface, wherein the second interface comprises a search result of the first device, a search result of the second device, and a search result of the third device.

2. The method according to claim 1, wherein the displaying, by the first device, a first interface comprises:
in response to an operation of opening a gallery application by a user, displaying, by the first device, a third interface, wherein the third interface comprises a first option; and
in response to an operation performed by the user on the first option, displaying, by the first device, the first interface, wherein the first interface further comprises an album of the first device.

3. The method according to claim 2, wherein the search result of the second device comprises prompt information of the second device, and the prompt information of the second device indicates a reason why data related to the keyword is not found in the second device.

4. The method according to claim 3, wherein the first device is connected to the second device, and the prompt information of the second device indicates that the second device does not comprise the data related to the keyword.

5. The method according to claim 3, wherein the first device is not connected to the second device, and the prompt information of the second device indicates a reason why the first device fails to be connected to the second device.

6. The method according to claim 5, wherein the second interface further comprises a second option, and the method further comprises:
in response to an operation performed by the user on the second option, establishing, by the first device, a connection to the second device, and searching for data of the second device based on the keyword after being connected to the second device.

7. The method according to claim 2, wherein the search result of the second device comprises a thumbnail of a picture related to the keyword in the second device, and the method further comprises:
detecting, by the first device, a connected state between the first device and the second device; and
if the first device detects that the connected state between the first device and the second device is switched to a disconnected state and the first device can find the second device, displaying a fourth interface, wherein the fourth interface comprises the search result of the first device and a reason why the first device is disconnected from the second device; or
if the first device detects that the connected state between the first device and the second device is switched to a disconnected state and the first device cannot find the second device, displaying a fifth interface, wherein the fifth interface comprises the search result of the first device and does not comprise related information of the second device.

8. The method according to claim 7, wherein the fourth interface further comprises a third option, and the third option is used to trigger the first device to establish a connection to the second device.

9. The method according to claim 7 or 8, further comprising:
continuing, by the first device, to display the second interface within a first time since the first device is disconnected from the second device, wherein the second interface further comprises a fourth option; and
in response to an operation performed by the user on the fourth option, displaying, by the first device, a sixth interface, wherein the sixth interface comprises the search result of the second device.

10. The method according to claim 9, wherein the first device is disconnected from the second device within the first time, and the first device has not detected that the first device is disconnected from the second device.

11. The method according to claim 9, further comprising:
when the first device displays the sixth interface, if the first device detects that the connected state between the first device and the second device is switched to the disconnected state, displaying a seventh interface, wherein the seventh interface comprises first prompt information, and the first prompt information indicates that the first device is disconnected from the second device.

12. The method according to any one of claims 9 to 11, wherein the sixth interface further comprises a fifth option, and the method further comprises:
in response to an operation performed by the user on the fifth option, if the first device detects that the connected state between the first device and the second device is switched to the disconnected state and the first device can find the second device, displaying an eighth interface, wherein the eighth interface comprises the search result of the first device and the reason why the first device is disconnected from the second device is indicated; or
if the first device detects that the connected state between the first device and the second device is switched to the disconnected state and the first device cannot find the second device, displaying a ninth interface, wherein the ninth interface comprises the search result of the first device and does not comprise the related information of the second device.

13. The method according to any one of claims 9 to 11, further comprising:
in response to an operation performed by the user on a first thumbnail of the second device on the sixth interface, displaying, by the first device, a tenth interface, wherein the tenth interface comprises a second thumbnail, the first thumbnail is any one of thumbnails of pictures related to the keyword in the second device, the first thumbnail and the second thumbnail are different sizes of thumbnails of a same picture, and the size of the first thumbnail is less than the size of the second thumbnail; and
if the first device detects that the connected state between the first device and the second device is switched to the disconnected state, displaying an eleventh interface, wherein the eleventh interface comprises second prompt information, and the second prompt information indicates that the first device is disconnected from the second device.

14. The method according to claim 13, wherein the tenth interface further comprises a sixth option, and the method further comprises:
in response to an operation performed by the user on the sixth option, if the first device detects that the connected state between the first device and the second device is switched to the disconnected state and the first device can find the second device, displaying a twelfth interface, wherein the twelfth interface comprises the search result of the first device and the reason why the first device is disconnected from the second device is indicated; or
if the connected state between the first device and the second device is switched to the disconnected state and the first device cannot find the second device, displaying a thirteenth interface, wherein the thirteenth interface comprises the search result of the first device and does not comprise the related information of the second device.

15. The method according to any one of claims 7 to 14, further comprising:
in response to an operation performed by the user on the first thumbnail of the second device on the second interface, displaying, by the first device, the tenth interface, wherein the tenth interface comprises the second thumbnail, a copy option, a download option, a sharing option, and an edit option, the first thumbnail is any one of the thumbnails of the pictures related to the keyword in the second device, the first thumbnail and the second thumbnail are different sizes of thumbnails of the same picture, and the size of the first thumbnail is less than the size of the second thumbnail;
in response to an operation performed by the user on the copy option, copying, by the first device, the picture corresponding to the second thumbnail;
in response to an operation performed by the user on the download option, downloading, by the first device, the picture corresponding to the second thumbnail;
in response to an operation performed by the user on the sharing option, sharing, by the first device, the picture corresponding to the second thumbnail; and
in response to an operation performed by the user on the edit option, displaying, by the first device, an interface for editing the picture corresponding to the second thumbnail.

16. The method according to any one of claims 1 to 15, further comprising:
in response to an operation performed by the user on the device name of the second device, if the first device is successfully connected to the second device, displaying, by the first device, a fourteenth interface, wherein the fourteenth interface comprises abstract information of the data of the second device; and
if the first device is not connected to the second device, displaying, by the first device, a fifteenth interface, wherein the fifteenth interface comprises a reason why the first device fails to be connected to the second device.

17. The method according to claim 16, wherein a first position in the fourteenth interface comprises abstract information of first data, a first position in the sixteenth interface comprises abstract information of second data, the sixteenth interface is an interface displayed on the first device in response to the previous operation performed by the user on the device name of the second device, and a position of the abstract information of the first data in the fourteenth interface is the same as a position of the abstract information of the second data in the sixteenth interface.

18. The method according to claim 16, further comprising:
if the first device detects that data of the second device is updated, displaying, by the first device, a seventeenth interface, wherein the seventeenth interface comprises abstract information of the updated data of the second device.

19. An electronic device, comprising: a memory, a processor, and a display screen, wherein
the processor is coupled to the memory and the display screen, the memory is configured to store computer program code, and the computer program code comprises computer instructions; and
when the computer instructions are executed by the processor, the electronic device is enabled to perform the method according to any one of claims 1 to 18.

20. A computer-readable storage medium, comprising computer instructions, wherein when the computer instructions are run on an electronic device, the electronic device is enabled to perform the method according to any one of claims 1 to 18.
